# EUROPEAN PATENT APPLICATION

(11) **EP 4 671 998 A1**
(43) Date of publication of application: **31.12.2025**
(21) Application number: 25174303.5
(22) Date of filing: 05.05.2025
(51) Int. Cl.: G06F 11/362

(54) **APPARATUS, SYSTEM, AND METHOD OF DEBUGGING**

(30) Priority: 29.06.2024 US 202418759852
(71) Applicant: Intel Corporation, Santa Clara, CA 95054 (US)
(72) Inventor: NELSON, Aruni P., Folsom, 95630 (US); CARRIERI, Enrico, Placerville, 95667 (US); MISHRA, Ashok, Portland, 97229 (US)
(74) Representative: Maiwald GmbH

(57) **Abstract**

For example, a debug target may include an interconnect interface; and a debug manager configured to cause the debug target to process a debug request message received from a Debug and Test System (DTS) via the interconnect interface. For example, the debug request message may include a group Identifier (ID) value and a debug request. For example, the debug manager may be configured to cause the debug target to execute the debug request, for example, based on a determination that the group ID value is to identify a group of debug targets including the debug target. For example, the debug manager may be configured to cause the debug target to send a debug response message via the interconnect interface, the debug response message including the group ID value and a debug response for the DTS.

## Description

### BACKGROUND

There are various debugging methods, which may be configured to support debugging of hardware and/or software, for example, to detect, triage, trace, and/or potentially eliminate mistakes, or bugs, in hardware and/or software.

For example, a Debug and Test System (DTS) may be connected to a Target System (TS), which is also referred to as a System Under Test (SUT). The DTS may implement debug software, which may be executed by the DTS, and may be connected through a physical connection to the TS.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a system implementation to debug Peripheral Component Interconnect Express (PCIe) endpoints, in accordance with some demonstrative aspects.
Fig. 3 is a schematic illustration of a system implementation to debug Universal Chiplet Interconnect Express (UCIe) chiplets, in accordance with some demonstrative aspects.
Figs. 4A, 4B, and 4C are schematic illustrations of a debugging procedure, in accordance with some demonstrative aspects.
Fig. 5 is a schematic illustration of a time synchronization packet format, in accordance with some demonstrative aspects.
Fig. 6 is a schematic illustration of a debug request format, in accordance with some demonstrative aspects.
Fig. 7 is a schematic illustration of a debug response format, in accordance with some demonstrative aspects.
Fig. 8 is a schematic flow-chart illustration of a method of debugging, in accordance with some demonstrative aspects.
Fig. 9 is a schematic flow-chart illustration of a method of debugging, in accordance with some demonstrative aspects.
Fig. 10 is a schematic flow-chart illustration of a method of debugging, in accordance with some demonstrative aspects.
Fig. 11 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a Personal Computer (PC), a server computer, a User Equipment (UE), a Mobile Device (MD), a desktop computer, a mobile computer, a laptop computer, a notebook computer, a tablet computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication device, a gaming device, a video device, an audio device, an audio-video (A/V) device, and the like.

Some aspects may be used in conjunction with devices and/or networks operating in accordance with existing Mobile Industry Processor Interface (MIPI) standards (including the MIPI SneakPeek Protocol (SPP) (*Specification for SneakPeek Protocol (SPP^{SM}), Version 2.1, 15 May 2023);* the MIPI System Trace Protocol (STP) *(Specification for System Trace Protocol (MIPI STP^{SM}), Version 2.4, 25 September 2023);* and the MIPI Trace Wrapper Protocol (TWP) (*Specification for Trace Wrapper Protocol (TWP^{SM}), Version 1.1, 3 September 2014))* and/or future versions and/or derivatives thereof, devices and/or networks operating in accordance with existing Peripheral Component Interconnect Express (PCIe) standards (including *PCI Express Base Specification Revision 6.2, January 25, 2024)* and/or future versions and/or derivatives thereof, devices and/or networks operating in accordance with existing Universal Chiplet Interconnect Express (UCIe) standards (including *Universal Chiplet Interconnect Express (UCIe) Specification, Revision 1.1, Version 1.0, July 20, 2023)* and/or future versions and/or derivatives thereof, devices and/or networks operating in accordance with existing Compute Express Link (CXL) standards (including *Compute Express Link^{™} (CXL^{™}) Specification, August 2023, Revision 3.1)* and/or future versions and/or derivatives thereof, and the like.

The term "communicating" as used herein with respect to a signal, a package, a message, or the like, includes transmitting the signal, package, and/or message, and/or receiving the signal, package, and/or message. For example, a device, which is capable of communicating a signal, package, and/or message, may include a transmitter to transmit (send) the signal, package, and/or message to at least one other device, and/or a receiver to receive the signal, package, and/or message from at least one other device. The verb communicating may be used to refer to the action of transmitting (sending) or the action of receiving. In one example, the phrase "communicating a signal, package, and/or message" may refer to the action of transmitting the signal, package, and/or message by a first device, and may not necessarily include the action of receiving the signal, package, and/or message by a second device. In another example, the phrase "communicating a signal, package, and/or message" may refer to the action of receiving the signal, package, and/or message by a first device, and may not necessarily include the action of transmitting the signal, package, and/or message by a second device.

As used herein, the term "circuitry" may refer to, be part of, or include, an integrated circuit, an electronic circuit, analog circuitry, digital circuitry, hard wired circuitry, programmable circuitry, processor circuitry, microcontroller circuitry, hardware logic circuitry, state machine circuitry, an Application Specific Integrated Circuit (ASIC), a processor (shared, dedicated, or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stack, buffers, and/or the like, coupled to the one or more processors, e.g., as necessary to execute the logic.

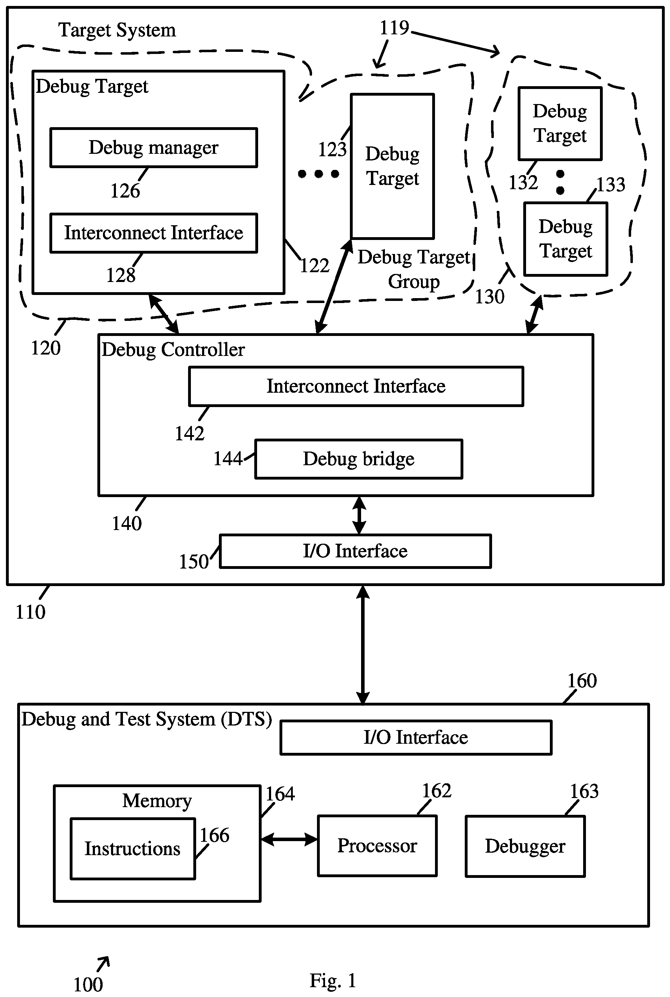

Reference is made to Fig. 1, which schematically illustrates a system 100, in accordance with some demonstrative aspects.

As shown in Fig. 1, in some demonstrative aspects, system 100 may include a Debug and Test System (DTS) 160, which may be configured to debug one or more operations and/or functionalities of one or more components of a Target System (TS) (also referred to as Device Under Test (DUT) or System Under Test (SUT)) 110, e.g., as described below.

In some demonstrative aspects, the target system 110 may include, or may be implemented, as a "platform", which may include a functional system that may include one or more boards, and one or more components positioned on the one or more boards. For example, one or more of the boards and/or components may be debugged by the DTS 160.

In some demonstrative aspects, the target system 110 may include a plurality of debug targets 119, e.g., including a debug target 122, a debug target 123, a debug target 132, and/or a debug target 133, e.g., as described below.

In some demonstrative aspects, the plurality of debug targets 119 may include one or more debug "components". For example, a debug "component" may include, or may be implemented as part of, a compute element, e.g., an independent compute element, for example, a microcontroller, a microprocessor, or the like, which may be debugged.

In some demonstrative aspects, a debug component may be implemented, for example, in an independent package, e.g., as a system-on-chip (SoC), a platform controller hub (PCH), an embedded controller (EC), a dedicated graphics processing unit (GPU), a field programmable gate array (FPGA), or the like.

In some demonstrative aspects, a debug component may be implemented, for example, as an integrated sensor hub (ISH), an audio and context engine (ACE), a computing core, a converged security and manageability engine (CSME), a power management controller (PMC), an operating system security engine (OSSE), or the like.

In some demonstrative aspects, at least some, e.g., some or all, of the plurality of debug targets 119 may include a plurality of PCIe endpoints.

For example, one or more of debug target 122, debug target 123, debug target 132, and/or debug target 133 may include a PCIe endpoint.

For example, the PCIe endpoint may reside at the end of a PCIe link, and may communicate with a root complex, e.g., a Central Processing Unit (CPU) or a host controller, for example, through a root port.

For example, the PCIe endpoint may include a hardware component, such as, for example, a graphics card, a storage drive, a network adapter, or the like.

In some demonstrative aspects, at least some, e.g., some or all, of the plurality of debug targets 119 may include a plurality of interconnected dies (also referred to as "chiplets"), for example, UCIe chiplets.

For example, one or more of debug target 122, debug target 123, debug target 132, and/or debug target 133 may include a chiplet.

For example, a chiplet may include a compute die, e.g., a CPU die, a Graphic Processing Unit (GPU) die, and/or any other compute die; an accelerator die, e.g., a Neural Processing Unit (NPU) die, an Artificial Intelligence (AI) accelerator die, and/or any other accelerator die; an Input/Output (I/O) tile die, and/or any other additional or alternative type of dies.

In other aspects, one or more of the debug targets 119 of target system 110, e.g., debug target 122, debug target 123, debug target 132, and/or debug target 133, may include any other type of device and/or component to be debugged by the DTS 160.

In some demonstrative aspects, DTS 160 may include, or may be implemented as part of, a suitable computing device or computing system.

In some demonstrative aspects, DTS 160 may include a debugger 163, which may be configured to implement one or more debugging operations and/or functionalities, for example, to debug one or more debug targets 119 on target system 110, e.g., as described below.

In some demonstrative aspects, debugger 163 may be implemented by software and/or an application to be executed by the DTS 160, e.g., as described below.

In some demonstrative aspects, DTS 160 may include at least one memory and/or storage unit 164, which may be configured to store instructions 166.

In some demonstrative aspects, DTS 160 may include at least one processor 162, which may be configured to execute the instructions 166. For example, the instructions 166, when executed by processor 162, may result in the debugger 163, and/or may cause the DTS 160 to perform one or more operations and/or functionalities of the debugger 163, e.g., as described below.

In other aspects, one or more operations and/or functionalities of the debugger 163 may be implemented by suitable logic and/or circuitry, e.g., dedicated debugger logic and/or circuitry, which may be implemented as part of DTS 160.

In some demonstrative aspects, one or more elements of system 100 may be configured to provide a technical solution to support debugging, e.g., cohesive debugging, of a plurality of interdependent system components, e.g., debug targets, in a system at scale, e.g., target system 110, as described below.

For example, the target system 110 may include two or more debug targets, e.g., pieces of silicon, chiplets, packages, sockets, boards, and/or any other components, which may be connected via one or more suitable interfaces, for example, PCIe interfaces, CXL interfaces, UCIe interfaces, or the like.

In one example, the target system 110 may be part of a larger system, one or more sets of systems, or the like.

In some demonstrative aspects, one or more elements of system 100 may be configured to perform one or more operations and/or functionalities of a debugging mechanism, which may be configured to provide a technical solution to support debugging of a plurality of interconnected debug targets 119, e.g., as described below.

For example, one or more, e.g., some or all, operations and/or functionalities of the debugging mechanism described herein may be implemented to provide a technical solution to address technical issues of some debugging implementations, e.g., as described below.

For example, some debugging systems may be limited to debugging a limited number and/or type, e.g., one component or a handful of components, of a system, e.g., a piece of silicon, a chiplet, a package, a socket, or a single board, at a time. Accordingly, such debugging systems may fail to reproduce a debugged issue, and may require a long time to root-cause a failure, which may lead to a longer time to market.

For example, the functionality of some debugging systems may be limited by an involvement of a host of an interface, e.g., a PCIe Host, in the process of debugging, which may consume system resources.

For example, the functionality of some debugging systems may be limited by a need to perform the debugging of components one at a time, which may result in a situation where the system is not able to reproduce the failure, and/or a situation where the debugging disrupts the setup.

In some demonstrative aspects, one or more elements of system 100 may be configured to perform one or more operations and/or functionalities of a debugging mechanism, which may be configured to provide a technical solution to support debugging of multiple debugging targes 119, e.g., simultaneously, for example, without disrupting the system setup, e.g., as described below.

In some demonstrative aspects, debugging mechanism, which may be configured to provide a technical solution to support debugging of heterogenous computing systems, e.g., as described below.

In some demonstrative aspects, debugging mechanism, which may be configured to provide a technical solution to support debugging of multiple targets, e.g., debugging targes 119, which may include multiple and interdependent targets, e.g., cores, PCIe devices, CXL devices, or the like, which may be debugged simultaneously, e.g., as described below.

In some demonstrative aspects, the debugging mechanism may be configured to provide a technical solution to support in system and at-scale debugging of interdependent system components, e.g., two or more of debugging targes 119, as described below.

In some demonstrative aspects, the debugging mechanism may be configured to provide a technical solution to support in system and at-scale debugging of interdependent system components, for example, substantially at any depth in the system topology, e.g., as described below.

In some demonstrative aspects, the debugging mechanism may be configured to provide a technical solution to support cohesive debugging of a plurality of interdependent system components, e.g., debug targets 119, as described below.

In some demonstrative aspects, the debugging mechanism may be configured to provide a technical solution to support debugging of multiple system components, e.g., debug targets 119, for example, simultaneously in system and at-scale, e.g., as described below.

In some demonstrative aspects, one or more elements of system 100 may be configured to perform one or more operations and/or functionalities of a group-based debugging mechanism, which may be configured to support debugging of one or more groups of debug targets 119, e.g., as described below.

In some demonstrative aspects, the group-based debugging mechanism may be configured to provide a technical solution to support debugging of a plurality of debug targets belonging to a group of debugged targets, e.g., simultaneously, as described below.

In some demonstrative aspects, the debugging mechanism may be configured to provide a technical solution to support improved, e.g., reduced, time to debug a target system 100, and/or improved, e.g., reduced Time to Market (TTM).

In some demonstrative aspects, the debugging mechanism may be configured to provide a technical solution to support debugging of real-life failures, for example, for target systems with multiple system components interacting with each other, e.g., as described below.

In some demonstrative aspects, the debugging mechanism may be configured to provide a technical solution to support a debugging procedure, which may be applicable in closed chassis debug environments and/or in open-chassis debug environments, hence extending, for example, benefits to Original Equipment Manufacturers (OEMs) and/or speeding up the debugging process.

In some demonstrative aspects, the group-based debugging mechanism may be configured to provide a technical solution to support debugging of a "Group of Interdependent Debug Targets" (GIDT), e.g., as described below.

In some demonstrative aspects, a GIDT may include a plurality of debug targets, which may include, for example, all the components involved in providing a "system functionality" under debug.

In some demonstrative aspects, target system 110 may include a debug controller 140, which may include debug bridge 144, e.g., as described below.

In some demonstrative aspects, debug controller 140 may be implemented as part of, and/or in the form of, a Debug and Test Controller (DTC), e.g., as described below.

In some demonstrative aspects, debug controller 140 may be implemented as part of, a connected component of the target system 110, for example, a PCIe component, a CXL component, a Chiplet, or the like, e.g., as described below.

In some demonstrative aspects, the debug bridge 144 may be implemented by logic and/or circuitry of the debug controller 140, e.g., as described below.

For example, the debug bridge 144 may be configured to recognize, identify and/or understand the "Group of Interdependent Debug Targets", for example, based on Group Identifiers (Group-IDs), which may be assigned to the GIDTs, e.g., as described below.

In some demonstrative aspects, the debug bridge 144 may be configured to maintain and/or manage the "Group of Interdependent Targets" and/or the allocation of the Group-ID to the "Group of Interdependent Targets", e.g., as described below.

In some demonstrative aspects, the debug bridge 144 may be configured to manage the routing of debug messages, e.g., debug requests and/or debug responses, for example, to valid target devices under debug, e.g., debug targets 119, as described below.

In some demonstrative aspects, the debug bridge 144 may be configured to inform the DTS 160, for example, of one or more Quality of Service (QoS) parameters the debug bridge 144 can provide, for example, in managing the debug with a "Group of Interdependent Targets", e.g., as described below.

For example, the debug bridge 144 may be configured to send to the DTS 160 QoS information corresponding to a GIDT, for example, to indicate one or more QoS parameters the debug bridge 144 may be able to support for the GIDT.

In one example, the QoS information may include, for example, information indicating a supported total bandwidth provided for debug, information indicating potential latencies, or the like.

In some demonstrative aspects, debug controller 140 may be implemented as part of, or in the form of, a platform root of trust, or a debug root of trust, which may be configured, for example, to assist in authenticating the DTS 160 with the target devices under debug 119.

In some demonstrative aspects, a debug target of debug targets 119 may be configured to perform one or more operations and/or functionalities of a debug manager 126, e.g., as described below.

In some demonstrative aspects, the debug manager 126 may be implemented by logic and/or circuitry of a debug target 119, e.g., as described below.

In one example, the debug manager 126 may be implemented by hardware and/or a combination of hardware and software, which may be implemented by a connected component, e.g., a PCIe component, a CXL component, a Chiplet, or the like.

In some demonstrative aspects, the debug manager 126 of a debug target 119 may be configured to establish a correlation of time between the DTS 160 and a local time of the debug target 119, e.g., as described below.

For example, the debug manager 126 of a debug target 119 may be configured to implement a local timer, for example, to establish correlation of time between the time advertised by the DTS 160 and its local time, e.g., as described below.

In some demonstrative aspects, the debug manager 126 of the debug target 119 may be configured to manage physical hardware resource accesses for debug, e.g., as described below.

In some demonstrative aspects, the debug manager 126 of the debug target 119 may be configured to identify and/or recognize itself as part of the "Group of Interdependent Debug Targets", e.g., as described below.

For example, the debug manager 126 of the debug target 119 may be configured to recognize its association with a "Group of Interdependent Debug Targets", e.g., as described below.

For example, the debug manager 126 of the debug target 119 may be configured to use an assigned Group-ID of its "Group of Interdependent Debug Targets", for example, to recognize the debug requests from the DTS 160 targeted to the debug target 119, e.g., as described below.

For example, the debug manager 126 of the debug target 119 may be configured use the assigned Group-ID of its "Group of Interdependent Debug Targets", for example, to provide a debug response tagged with the Group-ID, e.g., as described below.

In some demonstrative aspects, the debug manager 126 of the debug target 119 may be configured to interface with a debug bridge, e.g., the debug bridge 144, of a debug controller, e.g., debug controller 140, e.g., as described below.

In some demonstrative aspects, the debug manager 126 of the debug target 119 may be configured to decrypt and/or encrypt debug messages, e.g., debug requests and/or debug responses, for example using one or more keys corresponding to the Group-ID of its "Group of Interdependent Debug Targets", e.g., as described below.

In some demonstrative aspects, the debug manager 126 of the debug target 119 may be configured to utilize a Platform Encryption Engine, for example, to decrypt and/or encrypt the debug messages.

In some demonstrative aspects, debugger 163 may be configured to gather the information of a "Group of Interdependent Targets", e.g., as described below.

In some demonstrative aspects, debugger 163 may be configured to allocate target devices under debug, e.g., debug targets 119, to specific debug groups, e.g., as described below.

In some demonstrative aspects, debugger 163 may be configured to read the group allocation for "Group of Interdependent Targets", for example, from a DTC, e.g., from the debug controller 140 DTC, from a System/product specification, and/or from any other suitable source.

For example, debugger 163 may be configured to read the group allocation for "Group of Interdependent Targets", for example, from a register set. For example, debug bridge 144 may be configured to maintain and/or manage the register set.

In some demonstrative aspects, debugger 163 may be configured to allocate debug session Group-IDs to the "Group of Interdependent Targets", for example, based on a system feature under debug.

In some demonstrative aspects, debugger 163 may be configured to ensure that debug requests, e.g., which are to be sent from the DTS 160, are tagged with the allocated Group-IDs for the appropriate "Group of Interdependent Debug Targets", e.g., as described below.

In some demonstrative aspects, debugger 163 may be configured to initiate time synchronization between the DTS 160 and debug targets 119 in a "Group of Interdependent Targets" under debug, e.g., as described below.

In some demonstrative aspects, debugger 163 may be configured to generate time synchronization packets, for example, for target devices under debug 119 within a "Group of Interdependent Debug Targets", e.g., as described below.

For example, debugger 163 may be configured to set a packet, e.g., a time synchronization packet, to include DTS time information corresponding to timeframe of DTS 160, for example, a DTS global time of DTS 160, e.g., as described below.

For example, debugger 163 may be configured to send the packet including the DTS time information, e.g., the time synchronization packet, to a DTC, e.g., debug controller 140, for example, for distribution to the debug targets 119 of a debug group, e.g., as described below.

In some demonstrative aspects, debugger 163 may be configured to interface with debug bridge 144, e.g., as described below.

In some demonstrative aspects, debugger 163 may be configured to manage authentication, encryption/decryption and/or identification of debug messages, e.g., debug requests and/or debug responses, for example, based on Group-IDs allocated to the one or more target groups, e.g., as described below.

For example, debugger 163 may be configured to perform a debug Session key exchange with authenticated "Group of Interdependent Targets", e.g., as described below.

For example, debugger 163 may be configured to encrypt and/or decrypt debug messages, e.g., debug requests and/or debug responses, which may be communicated with the debug targets 119, e.g., as described below.

In some demonstrative aspects, for example, in case of an implementation in a virtualized environment, e.g., which may include a virtualization of the target system 110 and/or debug targets 119, a hypervisor may be configured to identify and/or recognize the "Group of Interdependent Debug Targets", e.g., as described below.

For example, the hypervisor may be configured to maintain and provide synchronized and/or safe access of shared physical resources, e.g., to the debug manager 126.

For example, the hypervisor may be configured to identify, recognize and/or understand the "Group of Interdependent Debug Targets", for example, to manage routing of debug messages, e.g., debug requests and/or debug responses, for example, to valid Virtual Machines (VMs) and/or virtualized functions.

For example, the hypervisor may be configured to maintain knowledge of virtual functions and the boundaries of physical resources, which may be, for example, simultaneously accessed by multiple virtual functions during debug.

For example, in some implementations, the hypervisor may prevent debug requests from DTS 160. This situation may lead to simultaneous access to the shared physical resource of the target device under debug.

In some demonstrative aspects, a debug target 119 to be debugged by a DTS, e.g., a debug target 122, may include an interconnect interface 128, e.g., as described below.

In some demonstrative aspects, the debug target 122 may include a debug manager 126, which may be implemented to implement one or more operations and/or functionalities to manage debugging of the debug target 122, for example, as part of a group 120 of debug targets, e.g., as described below.

For example, as shown in Fig. 1, the group 120 may include a plurality of debug targets, e.g., including debug target 122 and debug target 123.

For example, the group 120 may be allocated with a group ID to identify the group 120. For example, the group ID of group 120 may be different from a group ID allocated to another group of debug targets, e.g., a group 130.

For example, a first group ID may be allocated to a first group, e.g., group 120, including a first plurality of debug targets, e.g., including debug target 122 and debug target 123.

For example, a second group ID may be allocated to a second group, e.g., group 130, including a second plurality of debug targets, e.g., including debug target 132 and debug target 133.

In some demonstrative aspects, the first group ID of the group and/or the second group ID of the group 130 may be allocated and/or managed, for example, by debug bridge 144 and/debugger 163, e.g., as described below.

In some demonstrative aspects, the group of debug targets 120 may include a group of interdependent targets to be debugged together for a debugged system functionality.

For example, the group of debug targets 120 may include a group of interdependent targets to be debugged together for a first debugged system functionality.

For example, the group of debug targets 130 may include a group of interdependent targets to be debugged together for a second debugged system functionality.

In other aspects, group of debug targets may be defined and/or allocated based on any other additional or alternative criteria.

In some demonstrative aspects, debug manager 126 may be configured to cause, control, trigger, and/or initiate debug target 122 to process a debug request message received via the interconnect interface 128, e.g., as described below.

In some demonstrative aspects, debug manager 126 may be configured to cause, control, trigger, and/or initiate debug target 122 to process the debug request message, for example, to identify a group ID value in a group ID field of the debug request message, e.g., as described below.

In some demonstrative aspects, debug manager 126 may be configured to cause, control, trigger, and/or initiate debug target 122 to determine whether the group ID value is to identify a group of debug targets, e.g., the group 120, including the debug target 122, e.g., as described below.

In some demonstrative aspects, debug manager 126 may be configured to cause, control, trigger, and/or initiate debug target 122 to execute a debug request from the DTS 160, for example, based on a determination that the group ID value is to identify the group of debug targets, e.g., group 120, including the debug target 122, e.g., as described below.

In some demonstrative aspects, debug manager 126 may be configured to cause, control, trigger, and/or initiate debug target 122 to send a debug response message via the interconnect interface 128, for example, based on the execution of the debug request from the DTS 160, e.g., as described below.

In some demonstrative aspects, debug manager 126 may be configured to cause, control, trigger, and/or initiate debug target 122 to set the debug response message to include the group ID value and a debug response for the DTS 160, e.g., as described below.

In some demonstrative aspects, the debug target 122 may include, for example, a PCIe endpoint, e.g., as described below. For example, the interconnect interface may include a PCIe interface.

In some demonstrative aspects, the debug target 122 may include, for example, a UCIe chiplet, e.g., as described below. For example, the interconnect interface may include a UCIe interface.

In some demonstrative aspects, the debug target 122 may include, for example, a CXL device, e.g., as described below. For example, the interconnect interface may include a CXL interface.

In other aspects, the debug target 122 may include any other suitable type of interconnect interface and/or may include any other type of interface.

In some demonstrative aspects, debug target 122 may be configured to communicate the debug request and/or the debug response according to a Mobile Industry Processor Interface (MIPI) format, e.g., as described below.

In some demonstrative aspects, the debug request may include a MIPI command, and/or the debug response may include a MIPI response, e.g., as described below.

In other aspects, the debug target 122 may be configured to communicate the debug request and/or the debug response according to any other suitable format.

In some demonstrative aspects, debug manager 126 may be configured to synchronize a local clock of the debug target 122, for example, to a DTS time of the DTS 160, for example, based on one or more time synchronization packets from the DTS 160, e.g., as described below.

In some demonstrative aspects, debug manager 126 may be configured to process a time synchronization packet, for example, to identify the group ID value, e.g., which corresponds to the group 120, in a group ID field of the time synchronization packet, e.g., as described below.

In some demonstrative aspects, debug manager 126 may be configured to determine a time correlation between the local clock of debug target 122 and a DTS clock, e.g., of DTS 160, for example, based on DTS time information in the time synchronization packet, e.g., as described below.

In some demonstrative aspects, debug manager 126 may be configured to set a timestamp in the debug response for the DTS 160, for example, based on the time correlation, e.g., as described below.

In some demonstrative aspects, the debug target 122 may be configured to communicate the time synchronization packet, for example, according to a MIPI format, e.g., as described below.

In other aspects, the debug target 122 may be configured to communicate the time synchronization packet according to any other suitable format.

In some demonstrative aspects, debug manager 126 may be configured to decrypt the debug request from the DTS 160, for example, according to debug session key information corresponding to the group ID of group 120, e.g., as described below.

In some demonstrative aspects, debug manager 126 may be configured to encrypt the debug response for the DTS 160, for example, according to the debug session key information corresponding to the group ID of group 120, e.g., as described below.

In some demonstrative aspects, debug manager 126 may be configured to cause, control, trigger, and/or initiate debug target 122 to communicate the debug request message and the debug response message with a DTC, e.g., debug controller 140, which may be between the debug target 122 and the DTS 160, e.g., as described below.

In some demonstrative aspects, debug manager 126 may be configured to cause, control, trigger, and/or initiate debug target 122 to communicate the debug request message and the debug response message with the debug bridge 144, which may be between the debug target 122 and the DTS 160, e.g., as described below.

In some demonstrative aspects, debug controller 140 may be configured to control debugging of the plurality of debug targets 119, e.g., as described below.

In some demonstrative aspects, debug controller 140 may be configured to control debugging of the plurality of debug targets 119, for example, based on the allocation of the debug targets 119 to one or more groups, for example, including the group 120 and/or the group 130, e.g., as described below.

In some demonstrative aspects, debug controller 140 may include an interconnect interface 142 to communicate with the plurality of debug targets 119, e.g., as described below.

In some demonstrative aspects, the debug controller 140 may include, or may be implemented by, a DTC, e.g., as described above.

In some demonstrative aspects, the interconnect interface 142 may include a PCIe interface, for example, to communicate with debug targets including PCIe endpoints, e.g., as described below.

In some demonstrative aspects, the debug controller 140 may include, or may be implemented by, a PCIe endpoint, e.g., as described below.

In some demonstrative aspects, the interconnect interface 142 may include a UCle interface, for example, to communicate with debug targets including UCIe chiplets, e.g., as described below.

In some demonstrative aspects, the debug controller 140 may include, or may be implemented by, a UCIe chiplet, e.g., as described below.

In some demonstrative aspects, the interconnect interface 142 may include a CXL interface, for example, to communicate with debug targets including CXL devices, e.g., as described below.

In some demonstrative aspects, the debug controller 140 may include, or may be implemented by, a CXL device, e.g., as described below.

In other aspects, interconnect interface 142 may include any other additional or alternative type of interface, and/or debug controller 140 may include, or may be implemented by, any other suitable type of device or component.

In some demonstrative aspects, debug controller 140 may be configured to communicate debug messages between the plurality of debug targets 119 and the DTS 160, e.g., as described below.

In some demonstrative aspects, target system 110 may include, for example, an Input/Output (I/O) interface 150, for example, to communicate debug request messages and debug response messages with the DTS 160, e.g., as described below.

In some demonstrative aspects, the debug bridge 144 of bridge controller 140 may be configured to identify an allocation of the plurality of debug targets 119 to one or more groups of debug targets, e.g., as described below.

For example, the debug bridge 144 may be configured to identify the allocation of the first plurality of debug targets, e.g., including debug target 122 and debug target 123, to the debug target group 120.

For example, the debug bridge 144 may be configured to identify the allocation of the second plurality of debug targets, e.g., including debug target 132 and debug target 133, to the debug target group 130.

In some demonstrative aspects, the debug bridge 144 of bridge controller 140 may be configured to identify a group of debug targets, for example, based on a group ID value in a group ID field of a debug request message from DTS 160, e.g., as described below.

For example, the debug bridge 144 of bridge controller 140 may be configured to identify the debug target group 120, for example, based on a determination that the group ID value in the group ID field of the debug request message matches the group ID of the debug target group 120.

In some demonstrative aspects, the debug bridge 144 of bridge controller 140 may be configured to forward the debug request message from the DTS 160 to one or more debug targets in the group of debug targets, e.g., as described below.

For example, the debug bridge 144 may be configured to forward the debug request message from the DTS 160 to the debug target 122 and/or the debug target 123 in the debug target group 120.

In some demonstrative aspects, the debug bridge 144 of bridge controller 140 may be configured to forward one or more debug response messages from the one or more debug targets to the DTS 160, e.g., as described below.

In some demonstrative aspects, the one or more debug response messages may include the group ID value, for example, of the debug target group to which the one or more debug targets belong, e.g., as described below.

For example, the debug bridge 144 may receive a debug response from the debug target 122, for example, based on the debug request forwarded to the debug target 122.

For example, the debug response from the debug target 122 may include the group ID value corresponding to the debug target group 120.

For example, the debug bridge 144 may receive the debug response from the debug target 122 to the DTS 160.

In some demonstrative aspects, the debug bridge 144 of bridge controller 140 may be configured to identify a first allocation of a first plurality of debug targets to a first group of debug targets, and a second allocation of a second plurality of debug targets to a second group of debug targets, e.g., as described below.

For example, debug bridge 144 may identify a first allocation of a first plurality of debug targets, e.g., e.g., including the debug target 122 and the debug target 123, to the debug target group 120.

For example, debug bridge 144 may identify a second allocation of a second plurality of debug targets, e.g., e.g., including the debug target 132 and the debug target 133, to the debug target group 130.

In some demonstrative aspects, the debug bridge 144 of bridge controller 140 may be configured to forward to the first group of debug targets a first debug request message from the DTS 160, for example, based on a determination that a group ID field in the first debug request message includes a first group ID value corresponding to the first group of debug targets, e.g., as described below.

For example, debug bridge 144 may receive a first debug request message from the DTS 160, and may identify that a group ID field in the first debug request message includes a first group ID value, for example, to identify the debug target group 120.

For example, debug bridge 144 may forward the first debug request message to the debug targets of the debug target group 120, e.g., debug target 122 and debug target 123, for example, based on the determination that the group ID field in the first debug request message includes the first group ID value to identify the debug target group 120.

In some demonstrative aspects, the debug bridge 144 of bridge controller 140 may be configured to forward to the second group of debug targets a second debug request message from the DTS 160, for example, based on a determination that a group ID field in the second debug request message includes a second group ID value corresponding to the second group of debug targets, e.g., as described below.

For example, debug bridge 144 may receive a second debug request message from the DTS 160, and may identify that a group ID field in the first debug request message includes a second group ID value, for example, to identify the debug target group 130.

For example, debug bridge 144 may forward the second debug request message to the debug targets of the debug target group 130, e.g., debug target 132 and debug target 133, for example, based on the determination that the group ID field in the first debug request message includes the second group ID value to identify the debug target group 130.

In some demonstrative aspects, the debug bridge 144 of bridge controller 140 may be configured to send to the DTS 160 a first debug response message from a first debug target in the first group of debug targets, e.g., as described below.

For example, debug bridge 144 may send to the DTS 160 a debug response message from debug target 122 and/or a debug response message from debug target 123, e.g., as described below.

For example, the debug response message from the debug target 122 may include a debug response for the DTS 160, e.g., in response to the first debug message from the DTS 160. For example, the debug response message from the debug target 122 may include a debug result based on execution of a debug request in the first debug message at the debug target 122. For example, the debug response message from the debug target 122 may include the first group ID value, for example, to identify the debug target group 120.

For example, the debug response message from the debug target 123 may include a debug response for the DTS 160, e.g., in response to the first debug message from the DTS 160. For example, the debug response message from the debug target 123 may include a debug result based on execution of a debug request in the first debug message at the debug target 123. For example, the debug response message from the debug target 123 may include the first group ID value, for example, to identify the debug target group 120.

In some demonstrative aspects, the debug bridge 144 of bridge controller 140 may be configured to send to the DTS 160 a second debug response message from a second debug target in the second group of debug targets, e.g., as described below.

For example, debug bridge 144 may send to the DTS 160 a debug response message from debug target 132 and/or a debug response message from debug target 133, e.g., as described below.

For example, the debug response message from the debug target 132 may include a debug response for the DTS 160, e.g., in response to the second debug message from the DTS 160. For example, the debug response message from the debug target 132 may include a debug result based on execution of a debug request in the second debug message at the debug target 132. For example, the debug response message from the debug target 132 may include the second group ID value, for example, to identify the debug target group 130.

For example, the debug response message from the debug target 133 may include a debug response for the DTS 160, e.g., in response to the second debug message from the DTS 160. For example, the debug response message from the debug target 133 may include a debug result based on execution of a debug request in the second debug message at the debug target 133. For example, the debug response message from the debug target 133 may include the second group ID value, for example, to identify the debug target group 130.

In some demonstrative aspects, the debug bridge 144 of bridge controller 140 may be configured to identify a group ID value in a group ID field of a time synchronization packet from the DTS 160, e.g., as described below.

In some demonstrative aspects, the debug bridge 144 of bridge controller 140 may be configured to forward the time synchronization packet to one or more debug targets in the group of debug targets identified by the group ID value, e.g., as described below.

For example, debug bridge 144 may identify the group ID value corresponding the debug target group 120 in a first time synchronization packet from the DTS 160.

For example, debug bridge 144 may forward the first time synchronization packet from the DTS 160 to the debug targets in the debug target group 120, e.g., debug target 122 and/or debug target 123, for example, based on the determination that the group ID value in the first time synchronization packet corresponds to the debug target group 120.

For example, debug bridge 144 may identify the group ID value corresponding the debug target group 130 in a second time synchronization packet from the DTS 160.

For example, debug bridge 144 may forward the second time synchronization packet from the DTS 160 to the debug targets in the debug target group 130, e.g., debug target 132 and/or debug target 133, for example, based on the determination that the group ID value in the second time synchronization packet corresponds to the debug target group 130.

In some demonstrative aspects, the debug bridge 144 of bridge controller 140 may be configured to send to the DTS 160 group allocation information to configure the allocation of the plurality of debug targets 119 to the one or more groups of debug targets, e.g., as described below.

For example, debug bridge 144 may send to the DTS 160 group allocation information to configure the allocation of one or more debug target of the plurality of debug targets 119, e.g., debug target 122 and/or debug target 123, to the debug target group 120; and/or the allocation of one or more debug target of the plurality of debug targets 119, e.g., debug target 132 and/or debug target 133, to the debug target group 130.

In some demonstrative aspects, debugger 163 may be configured to cause DTS 160 to identify an allocation of the plurality of debug targets 119 to one or more groups of debug targets.

For example, debugger 163 may identify allocation of one or more debug target of the plurality of debug targets 119, e.g., debug target 122 and/or debug target 123, to the debug target group 120; and/or the allocation of one or more debug target of the plurality of debug targets 119, e.g., debug target 132 and/or debug target 133, to the debug target group 130.

In some demonstrative aspects, debugger 163 may be configured to identify the allocation of the plurality of debug targets 119 to the one or more groups of debug targets, for example, based on the group allocation information from the debug bridge 144, e.g., as described below.

In some demonstrative aspects, debugger 163 may be configured to perform and/or configure the allocation of the plurality of debug targets 119 to the one or more groups of debug targets, e.g., as described below.

In some demonstrative aspects, debugger 163 may be configured to cause DTS 160 to send to debug controller 140 a debug request message for a group of debug targets controlled by the debug controller 140, e.g., as described below.

In some demonstrative aspects, debugger 163 may be configured to set the debug request message to include a debug request from the DTS 160, which may be configured, for example, for execution by one or more debug targets of the group of debug targets, e.g., as described below.

In some demonstrative aspects, debugger 163 may be configured to set the debug request message to include a group ID field including a group ID value to identify the group of debug targets, e.g., as described below.

For example, debugger 163 may be configured to set a first debug request message to include a first debug request from the DTS 160, which may be configured, for example, for execution by one or more debug targets of the debug target group 120, e.g., the debug target 122 and/or the debug target 123.

For example, debugger 163 may be configured to set the first debug request message to include a group ID field including the group ID value to identify the debug target group 120.

For example, debugger 163 may be configured to set a second debug request message to include a second debug request from the DTS 160, which may be configured, for example, for execution by one or more debug targets of the debug target group 130, e.g., the debug target 132 and/or the debug target 133.

For example, debugger 163 may be configured to set the second debug request message to include a group ID field including the group ID value to identify the debug target group 130.

In some demonstrative aspects, debugger 163 may be configured to process one or more debug response messages from the debug controller 140, e.g., as described below.

In some demonstrative aspects, a debug response message from the debug controller 140 may include a debug response provided from a debug target in a group of debug targets, for example, based on the debug request from the DTS 160, e.g., as described below.

In some demonstrative aspects, debugger 163 may be configured to process a group ID field of the debug response message to determine a group ID value to identify the group of debug targets from which the debug response message has been sent, e.g., as described below.

In some demonstrative aspects, debugger 163 may be configured to cause the DTS 160 to encrypt a debug request in a debug request message including a group ID of a group of debug targets, for example, according to debug session key information corresponding to the group ID of the group of debug targets, e.g., as described below.

For example, debugger 163 may encrypt a debug request in a debug request message including the group ID of the debug target group 120, for example, according to debug session key information corresponding to the group ID of the debug target group 120.

For example, debugger 163 may encrypt a debug request in a debug request message including the group ID of the debug target group 130, for example, according to debug session key information corresponding to the group ID of the debug target group 130.

In some demonstrative aspects, debugger 163 may be configured to cause the DTS 160 to decrypt a debug response in a debug response message including a group ID of a group of debug targets, for example, according to debug session key information corresponding to the group ID of the group of debug targets, e.g., as described below.

For example, debugger 163 may decrypt a debug response in a debug response message including the group ID of the debug target group 120, e.g., a debug response message from the debug target 122, for example, according to debug session key information corresponding to the group ID of the debug target group 120.

For example, debugger 163 may decrypt a debug response in a debug response message including the group ID of the debug target group 130, e.g., a debug response message from the debug target 132, for example, according to debug session key information corresponding to the group ID of the debug target group 130.

In some demonstrative aspects, debugger 163 may be configured to identify a first allocation of a first plurality of debug targets to a first group of debug targets, and a second allocation of a second plurality of debug targets to a second group of debug targets, e.g., as described below.

For example, debugger 163 may identify a first allocation of a first plurality of debug targets, e.g., e.g., including the debug target 122 and the debug target 123, to the debug target group 120.

For example, debugger 163 may identify a second allocation of a second plurality of debug targets, e.g., e.g., including the debug target 132 and the debug target 133, to the debug target group 130.

In some demonstrative aspects, debugger 163 may be configured to cause DTS 160 to send to the debug controller 140 a first debug request message for the first group of debug targets, e.g., as described below.

In some demonstrative aspects, debugger 163 may be configured to set a group ID field in the first debug request message to include a first group ID value corresponding to the first group of debug targets, e.g., as described below.

For example, debugger 163 may cause DTS 160 to send to the debug controller 140 a first debug request message for the debug target group 120.

For example, debugger 163 may set a group ID filed in the first debug request message to include the group ID of the debug target group 120.

In some demonstrative aspects, debugger 163 may be configured to cause DTS 160 to send to the debug controller 140 a second debug request message for the second group of debug targets, e.g., as described below.

In some demonstrative aspects, debugger 163 may be configured to set a group ID field in the second debug request message to include a second group ID value corresponding to the second group of debug targets, e.g., as described below.

For example, debugger 163 may cause DTS 160 to send to the debug controller 140 a second debug request message for the debug target group 130.

For example, debugger 163 may set a group ID filed in the second debug request message to include the group ID of the debug target group 130.

In some demonstrative aspects, debugger 163 may be configured to process a first debug response message from a first debug target in the first group of debug targets, for example, to identify a first debug response from the first debug target, e.g., as described below.

In some demonstrative aspects, debugger 163 may be configured to process a group ID field of the first debug response message to identify the first group ID value corresponding to the first group of debug targets.

For example, debugger 163 may process a first debug response message from a first debug target in the debug target group 120, e.g., the debug target 122. For example, the first debug response message may be forwarded to debugger 163 by debug controller 140, e.g., as described above.

For example, debugger 163 may process a group ID field of the first debug response message to identify the first group ID value corresponding to the debug target group 120.

For example, debugger 163 may process the first debug response message, for example, to identify a first debug response from the first debug target in the debug target group 120, e.g., the debug target 122.

For example, the first debug response from the first debug target in the debug target group 120, e.g., the debug target 122, may be based on the first debug request sent from the debugger 163 to the debug target group 120.

In some demonstrative aspects, debugger 163 may be configured to process a second debug response message from a second debug target in the second group of debug targets, for example, to identify a second debug response from the second debug target, e.g., as described below.

In some demonstrative aspects, debugger 163 may be configured to process a group ID field of the second debug response message to identify the second group ID value corresponding to the second group of debug targets.

For example, debugger 163 may process a second debug response message from a second debug target in the debug target group 130, e.g., the debug target 132. For example, the second debug response message may be forwarded to debugger 163 by debug controller 140, e.g., as described above.

For example, debugger 163 may process a group ID field of the second debug response message to identify the second group ID value corresponding to the debug target group 130.

For example, debugger 163 may process the second debug response message, for example, to identify a second debug response from the second debug target in the debug target group 130, e.g., the debug target 132.

For example, the second debug response from the second debug target in the debug target group 130, e.g., the debug target 132, may be based on the second debug request sent from the debugger 163 to the debug target group 130.

In some demonstrative aspects, debugger 163 may be configured to cause the DTS 160 to send to the debug controller 140 a time synchronization packet for a group of debug targets, e.g., as described below.

In some demonstrative aspects, debugger 163 may be configured to set a group ID field of the time synchronization packet, for example, to a group ID value to identify the group of debug targets, e.g., as described below.

In some demonstrative aspects, debugger 163 may be configured to set in the time synchronization packet DTS time information corresponding to the DTS 160, e.g., as described below.

For example, debugger 163 may cause the DTS 160 to send to the debug controller 140 a first time synchronization packet for the debug target group 120.

For example, debugger 163 may set a group ID field of the first time synchronization packet to the group ID value of the debug target group 120.

For example, debugger 163 may cause the DTS 160 to send to the debug controller 140 a second time synchronization packet for the debug target group 130.

For example, debugger 163 may set a group ID field of the second time synchronization packet to the group ID value of the debug target group 130.

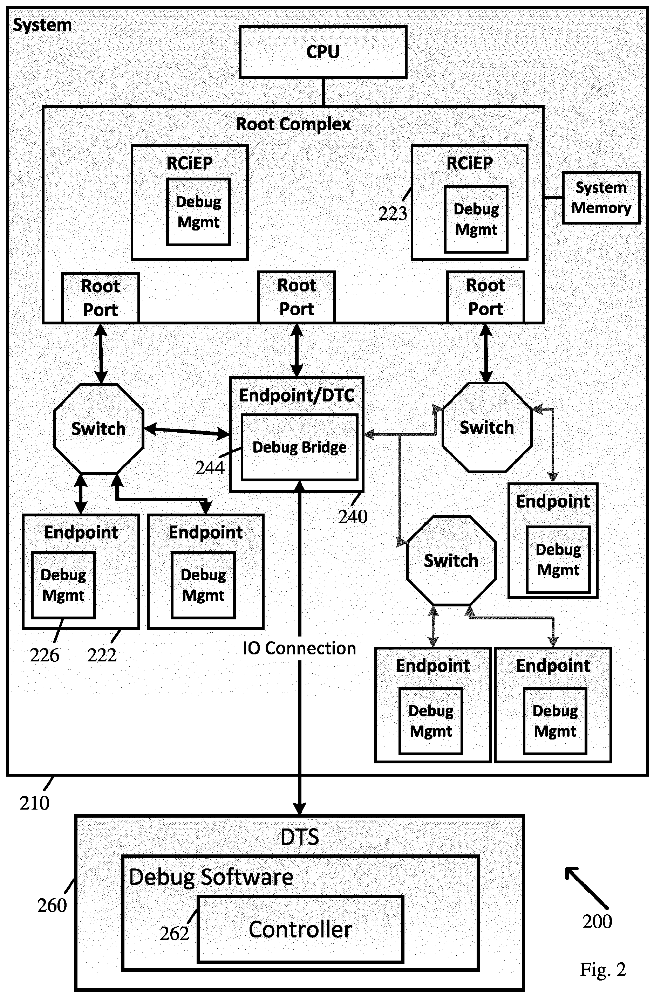

Reference is made to Fig. 2, which schematically illustrates a system implementation 200 to debug PCIe endpoints, in accordance with some demonstrative aspects.

In some demonstrative aspects, as shown in Fig. 2, system implementation 200 may include a target system 210, which may include a plurality of PCIe endpoints 222, which may be debugged by a DTS 260.

In some demonstrative aspects, as shown in Fig. 2, the plurality of PCIe endpoints 222 may include one or more Root Complex Integrated endpoints (RCiEPs) 223, which may be implemented in a root complex of the target system 210.

In some demonstrative aspects, as shown in Fig. 2, a PCIe endpoint 222 may include a debug manager 226, e.g., implemented by debug management logic, which may be configured to manage debugging of the endpoint 222, for example, as a debug target in a group of debugged targets, e.g., as described below.

For example, debug manager 226 may include debug manager 126 (Fig. 1) and/or may perform one or more operations of, and/or functionalities of, debug manager 126 (Fig. 1).

In some demonstrative aspects, as shown in Fig. 2, target system 210 may include a debug bridge 244, which may be configured to interface and/or bridge between the plurality of PCIe endpoints 222 and the DTS 260, e.g., as described below.

For example, debug bridge 244 may include debug bridge 144 (Fig. 1) and/or may perform one or more operations of, and/or functionalities of, debug bridge 144 (Fig. 1).

In some demonstrative aspects, as shown in Fig. 2, debug bridge 244 may be implemented as part of a PCIe endpoint 222 or a DTC 240. In other aspects, one or more functionalities of debug bridge 244 may be implemented as part of any other element of target system 210, and/or by a dedicated element.

For example, DTC 240 may include debug controller 140 (Fig. 1) and/or may perform one or more operations of, and/or functionalities of, debug controller 140 (Fig. 1).

In some demonstrative aspects, as shown in Fig. 2, DTS 260 may include a debugger controller (debugger) 262. For example, as shown in Fig. 2, one or more, e.g., some or all, operations and/or functionalities of debugger controller (debugger) 262 may be implemented by suitable debug software.

For example, controller (debugger) 262 may include debugger 163 (Fig. 1) and/or may perform one or more operations of, and/or functionalities of, debugger 163 (Fig. 1).

In some demonstrative aspects, debug manager 226 may be configured to include time synchronization logic, for example, to synchronize between a local clock of the PCIe endpoint 222 and a DTS clock of DTS 260.

For example, debug manager 226 may be configured to synchronize between the local clock of the PCIe endpoints 222 and the DTS clock of DTS 260, for example, based on time synchronization packets from the DTS 260, e.g., as described above.

In some demonstrative aspects, debug manager 226 may be configured to maintain a debug group association of the PCIe endpoints 222 with a group of debug targets.

For example, debug manager 226 may be configured to maintain a debug group association of the PCIe endpoints 222 with the debug target group 120 (Fig. 1), e.g., as described above.

In some demonstrative aspects, debug manager 226 may be configured to interface with the debug bridge 244, e.g., in the DTC 240.

For example, debug manager 226 may be configured to communicate debug messages, e.g., debug request messages and/or debug response messages, with the debug bridge 244, e.g., as described above.

In some demonstrative aspects, debug bridge 244 may be configured to move, e.g., to transparently move, debug messages and/or data between elements of system 200.

For example, debug bridge 244 may be configured to forward one or more messages, for example, debug request messages, time synchronization packets, and/or any other additional or alternative type of messages, which may be sent from DTS 260 to one or more debug targets, for example, one or more PCIe endpoints 222 of one or more debug target groups, e.g., as described above.

For example, debug bridge 244 may be configured to forward one or more messages, for example, debug response messages, and/or any other additional or alternative type of messages, which may be sent to DTS 260 from one or more debug targets, for example, one or more PCIe endpoints 222 of one or more debug target groups, e.g., as described above.

In some demonstrative aspects, debug bridge 244 may be configured to interface with the debug management logic in the devices under debug.

For example, debug bridge 244 may be configured to interface with the debug manager 226 of the PCIe endpoint 222, e.g.,. as described above.

In some demonstrative aspects, debug bridge 244 may be configured to identify a target device under debug, e.g., the PCIe endpoint 222, for example, based on the group ID, which may be used by the debug software, e.g., controller 262.

In some demonstrative aspects, the group ID of a debug target group may be assigned, and/or managed, for example, by the root of trust of target system 210.

In some demonstrative aspects, the group ID of a debug target group may be assigned, and/or managed, for example, by the debug software, e.g., controller 262.

In some demonstrative aspects, the DTC 240 may be configured as the root of trust of target system 210.

In some demonstrative aspects, debug bridge 244 may be configured to handle the debug group allocation of the plurality of debug targets to the one or more debug target groups, for example, in implementations where DTC 240 is configured as the root of trust.

In some demonstrative aspects, debug bridge 244 may be configured to route messages, e.g., debug messages, data messages, and/or any other types of messages, between the DTS 260 and devices under debug, e.g., PCIe endpoints 222.

For example, debug bridge 244 may be configured to route the message between and the DTS 260 and the devices under debug 222, for example, based on the group IDs assigned to the devices under debug 222, e.g., as described above.

In some demonstrative aspects, controller 262 may implement a mechanism, which may be configured to read the debug group allocation, for example, from the debug bridge 244, for example, in case of an implementation where the debug bridge 244 is to maintain, perform and/or manage the allocation of the debug targets to the one or more debug target groups, e.g., as described above.

In some demonstrative aspects, controller 262 may implement a mechanism, which may be configured to write and/or program the debug group allocation within the debug bridge 244, for example, in case of an implementation where the controller 262 is to maintain, perform and/or manage the allocation of the debug targets to the one or more debug target groups, e.g., as described above.

In some demonstrative aspects, controller 262 may be configured to generate time synchronization packets for time synchronization of debug devices within a debug group, e.g., as described above.

In some demonstrative aspects, controller 262 may be configured to interface with the debug bridge 244, for example, in a non-virtualized setup, e.g., as described above.

In some demonstrative aspects, controller 262 may be configured to inform the debug bridge 244, e.g., in the DTC 240, for example, about the "Group of Interdependent Target Devices", e.g., as described above.

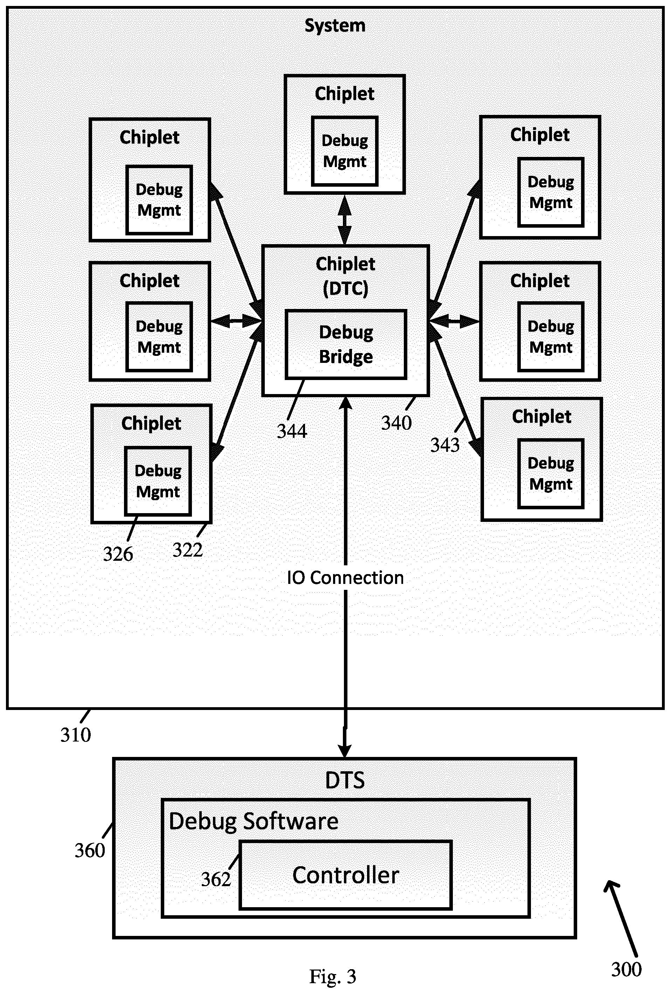

Fig. 3 is a schematic illustration of a system implementation 300 to debug Universal Chiplet Interconnect Express (UCIe) chiplets, in accordance with some demonstrative aspects.

In some demonstrative aspects, as shown in Fig. 3, system implementation 300 may include a target system 310, which may include a plurality of UCIe chiplets 322, which may be debugged by a DTS 360. For example, as shown in Fig. 3, the plurality of UCIe chiplets 322 may be interconnected by a plurality f UCIe links 343.

In some demonstrative aspects, as shown in Fig. 3, a UCIe chiplet 322 may include a debug manager 326, e.g., implemented by debug management logic, which may be configured to manage debugging of the UCIe chiplet 322, for example, as a debug target in a group of debugged targets, e.g., as described below.

For example, debug manager 326 may include debug manager 126 (Fig. 1) and/or may perform one or more operations of, and/or functionalities of, debug manager 126 (Fig. 1).

In some demonstrative aspects, as shown in Fig. 3, target system 310 may include a debug bridge 344, which may be configured to interface and/or bridge between the plurality of UCIe chiplets 322 and the DTS 360, e.g., as described below.

For example, debug bridge 344 may include debug bridge 144 (Fig. 1) and/or may perform one or more operations of, and/or functionalities of, debug bridge 144 (Fig. 1).

In some demonstrative aspects, as shown in Fig. 3, debug bridge 344 may be implemented as part of a UCIe chiplet 322 or a DTC 340. In other aspects, one or more functionalities of debug bridge 344 may be implemented as part of any other element of target system 310, and/or by a dedicated element.

For example, DTC 340 may include debug controller 140 (Fig. 1) and/or may perform one or more operations of, and/or functionalities of, debug controller 140 (Fig. 1).

In some demonstrative aspects, as shown in Fig. 3, DTS 360 may include a controller (debugger) 362. For example, as shown in Fig. 3, one or more, e.g., some or all, operations and/or functionalities of controller (debugger) 362 may be implemented by suitable debug software.

For example, controller (debugger) 362 may include debugger 163 (Fig. 1) and/or may perform one or more operations of, and/or functionalities of, debugger 163 (Fig. 1).

In some demonstrative aspects, debug manager 326 may be configured to include time synchronization logic, for example, to synchronize between a local clock of the UCIe chiplet 322 and a DTS clock of DTS 360.

For example, debug manager 326 may be configured to synchronize between the local clock of the UCIe chiplets 322 and the DTS clock of DTS 360, for example, based on time synchronization packets from the DTS 360, e.g., as described above.

In some demonstrative aspects, debug manager 326 may be configured to maintain a debug group association of the UCIe chiplets 322 with a group of debug targets.

For example, debug manager 326 may be configured to maintain a debug group association of the UCIe chiplets 322 with the debug target group 120 (Fig. 1), e.g., as described above.

In some demonstrative aspects, debug manager 326 may be configured to interface with the debug bridge 344, e.g., in the DTC 340.

For example, debug manager 326 may be configured to communicate debug messages, e.g., debug request messages and/or debug response messages, with the debug bridge 344, e.g., as described above.

In some demonstrative aspects, debug bridge 344 may be configured to move, e.g., to transparently move, debug messages and/or data between elements of system 300.

For example, debug bridge 344 may be configured to forward one or more messages, for example, debug request messages, time synchronization packets, and/or any other additional or alternative type of messages, which may be sent from DTS 360 to one or more debug targets, for example, one or more UCIe chiplets 322 of one or more debug target groups, e.g., as described above.

For example, debug bridge 344 may be configured to forward one or more messages, for example, debug response messages, and/or any other additional or alternative type of messages, which may be sent to DTS 360 from one or more debug targets, for example, one or more UCIe chiplets 322 of one or more debug target groups, e.g., as described above.

In some demonstrative aspects, debug bridge 344 may be configured to interface with the debug management logic in the devices under debug.

For example, debug bridge 344 may be configured to interface with the debug manager 326 of the UCIe chiplet 322, e.g.,. as described above.

In some demonstrative aspects, debug bridge 344 may be configured to identify a target device under debug, e.g., the UCIe chiplet 322, for example, based on the group ID, which may be used by the debug software, e.g., controller 362.

In some demonstrative aspects, the group ID of a debug target group may be assigned, and/or managed, for example, by the root of trust of target system 310.

In some demonstrative aspects, the group ID of a debug target group may be assigned, and/or managed, for example, by the debug software, e.g., controller 262.

In some demonstrative aspects, the DTC 340 may be configured as the root of trust of target system 310.

In some demonstrative aspects, debug bridge 344 may be configured to handle the debug group allocation of the plurality of debug targets to the one or more debug target groups, for example, in implementations where DTC 340 is configured as the root of trust.

In some demonstrative aspects, debug bridge 344 may be configured to route messages, e.g., debug messages, data messages, and/or any other types of messages, between the DTS 360 and devices under debug, e.g., UCIe chiplets 322.

For example, debug bridge 344 may be configured to route the message between and the DTS 360 and the devices under debug 322, for example, based on the group IDs assigned to the devices under debug 322, e.g., as described above.

In some demonstrative aspects, debug controller 362 may implement a mechanism, which may be configured to read the debug group allocation, for example, from the debug bridge 344, for example, in case of an implementation where the debug bridge 344 is to maintain, perform and/or manage the allocation of the debug targets to the one or more debug target groups, e.g., as described above.

In some demonstrative aspects, controller 362 may implement a mechanism, which may be configured to write and/or program the debug group allocation within the debug bridge 344, for example, in case of an implementation where the controller 362 is to maintain, perform and/or manage the allocation of the debug targets to the one or more debug target groups, e.g., as described above.

In some demonstrative aspects, controller 362 may be configured to generate time synchronization packets for time synchronization of debug devices within a debug group, e.g., as described above.

In some demonstrative aspects, controller 362 may be configured to interface with the debug bridge 344, for example, in a non-virtualized setup, e.g., as described above.

In some demonstrative aspects, controller 362 may be configured to inform the debug bridge 344, e.g., in the DTC 340, for example, about the "Group of Interdependent Target Devices", e.g., as described above.

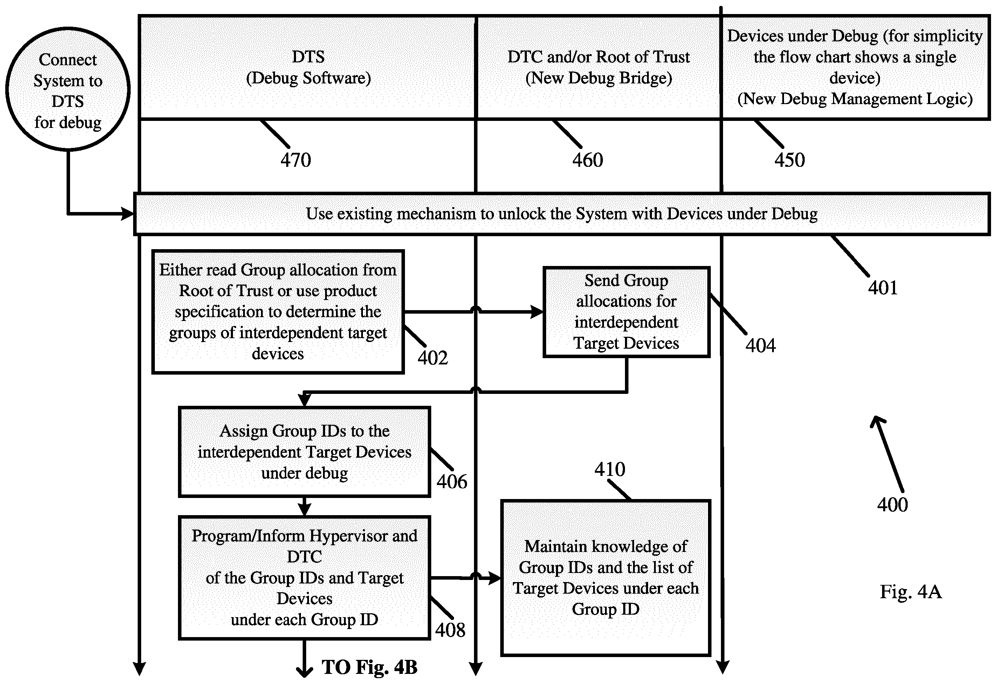

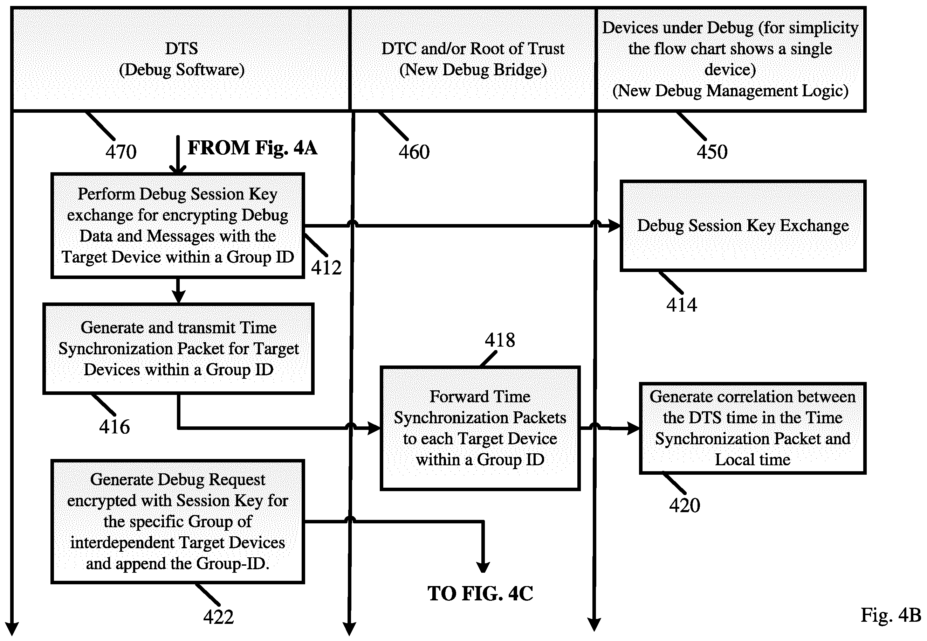

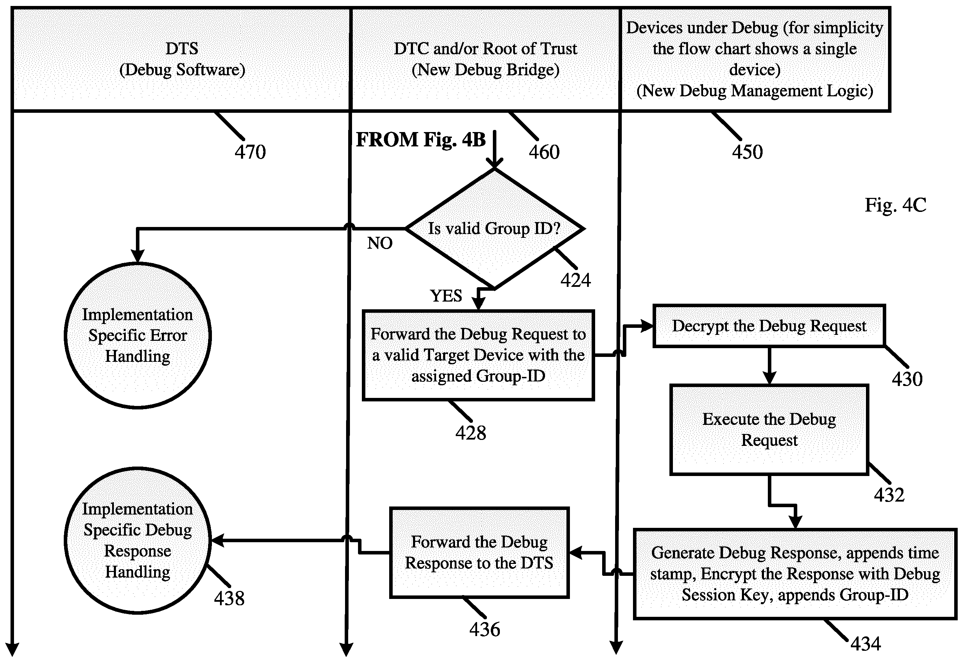

Reference is made to Figs. 4A, 4B, and 4C, which schematically illustrate a debugging procedure 400, in accordance with some demonstrative aspects.

In some demonstrative aspects, as shown in Figs. 4A, 4B, and 4C, one or more operations of the debugging procedure 400 may be performed by a DTS 470, a plurality of debug targets ("devices under debug") 450, which may be debugged by the DTS 470, and a debug bridge 460, which may be configured to interface between the DTS 470 and the plurality of devices under debug 450, e.g., as described below.

For example, DTS 160 (Fig. 1) and/or debugger 163 (Fig. 1) may be configured to perform the role of DTS 470, and/or to perform one or more operations of, and/or functionalities of, DTS 470.

For example, debug controller 140 (Fig. 1) and/or debug bridge 144 (Fig. 1) may be configured to perform the role of debug bridge 460, and/or to perform one or more operations of, and/or functionalities of, debug bridge 460.

For example, debug target 122 (Fig. 1) and/or debug manager 126 (Fig. 1) may be configured to perform the role of a debug target 450, and/or to perform one or more operations of, and/or functionalities of, the debug target 450.

In some demonstrative aspects, as shown in Fig. 4A, the debugging procedure 400 may be initiated, for example, when a system with devices which need to be debugged 450 is connected to the DTS 470.

In some demonstrative aspects, as shown in Fig. 4A, the DTS 470 may be provided access (401) to the debugged targets 450, for example, according to a debug mechanism, which may be handled and/or managed, for example, by an interface host, e.g., a PCIe host, and/or a platform root of trust.

In some demonstrative aspects, as shown in Fig. 4A, the DTS 470 may be configured to identify (402) a group allocation of the devices under debug 450 to one or more debug target groups.

For example, as shown in Fig. 4A, the debug software in the DTS 470, e.g., debugger 163 (Fig. 1), may read the group allocation of devices under debug 450, for example, through a product/system specification, and/or through a debug root of trust.

In some demonstrative aspects, the debug software in the DTS 470, e.g., debugger 163 (Fig. 1) may determine, for example, which devices under debug 450 may be grouped for interdependencies, for example, based on a feature under debug.

In some demonstrative aspects, a "Group of Interdependent Targets" may include a set of PCIe devices, a set of chiplets, a set of microprocessors, or the like, which may interact with each other, for example, to provide a specific function for the system, e.g., as described above.

In some demonstrative aspects, a configuration of the "Group of Interdependent Targets", e.g., the configuration of which debug targets 450 are assigned to which debug target group, may be defined, managed, and/or maintained, for example, by a root of trust in the system.

In one example, a platform root of trust may be configured, e.g., as a debug root of trust, to provide debug services, e.g., including the management of the allocation of the debug targets 450 to the debug target groups.

In another example, a separate and/or dedicated debug root of trust may be implemented to provide the debug services in the system, which maintains the configuration on the "Group of Interdependent Targets". This configuration could be changed based on the debug intent, life cycle state (e.g., manufacturing versus production), security policies/state, or level of privileged access where either some devices could be removed or updated from the group.

In some demonstrative aspects, the DTC 460 may be configured, for example, based on the "Group of Interdependent Targets", for example, to protect the routing or the switching of messages between the DTS 470 and the debug targets 450.

In some demonstrative aspects, the root of trust (ROT) may be implemented with suitable intelligence to ensure the protection of the routing of messages, e.g., debug messages and/or data.

In some demonstrative aspects, the debugger software of DTS 470, e.g., debugger 163 (Fig. 1), may utilize information, which may be read, for example, from a root of trust register set (e.g., a new register set), and/or from the system specification document, for example, to set up a debug session, e.g., when a system under debug is connected to the DTS 470.

In some demonstrative aspects, access may be provided to the DTS 470 for debugging the "Group of Interdependent Targets", e.g., as described above.

In some demonstrative aspects, the debug bridge, e.g., implemented by logic in the rot of trust of the system, may be configured to arbitrate, for example, whether the target devices 450 in the group can be accessed or not, and/or whether or not the routing of debug messages and/or data is allowed.

In some demonstrative aspects, as indicated at block 404 of Fig. 4A, the debugger software of DTS 470, e.g., debugger 163 (Fig. 1), may configure/update the "Group of Interdependent Targets", for example, by writing suitable group allocation information to the associated registers in the root of trust of the system, e.g., the debug controller 140 (Fig. 1).

In some demonstrative aspects, as indicated at block 406 of Fig. 4A, the debugger software of DTS 470, e.g., debugger 163 (Fig. 1), may generate (460) a group ID for a "Group of Interdependent Targets", and may utilize this group ID, for example, for all the subsequent debug related transactions, e.g., as described above.

In some demonstrative aspects, group IDs may be assigned to physical target devices 450, and/or to virtual target devices.

In some demonstrative aspects, in case of virtual target devices, for example, based on implementation policies, some operating systems may disable virtualization completely, and/or some operating systems may ensure the debug messages and debug data intended for a Virtual Machine (VM) are not propagated to other VMs.

In some demonstrative aspects, as indicated at blocks 408 and 410 of Fig. 4A, the debugger software of DTS 470, e.g., debugger 163 (Fig. 1), may inform the debug bridge 460 on the allocation of the plurality of debug targets 450 to the one or more debug target groups. For example, the debugger software of DTS 470, e.g., debugger 163 (Fig. 1), may provide to the debug bridge 460 group allocation information to identify which debug targets 450 are to be allocated to which debug target group, and/or which group ID is assigned to which debug target group.

In some demonstrative aspects, as indicated at blocks 412 and 414 of Fig. 4B, the debugger software of DTS 470, e.g., debugger 163 (Fig. 1), may perform a debug session key exchange with the "Group of Interdependent Targets" 450.

For example, the session key exchange may be implemented to set up debug session key information, which may be used to encrypt and/or decrypt messages, e.g., any subsequent debug message and/or debug data exchange, between the DTS 470 and the target device(s) under debug 450.

For example, the debug session key information may include one or more debug session keys, which may be, for example, unique for a group of interdependent devices under debug.

For example, one or more, e.g., all, subsequent message exchanges, e.g., debug message exchanges and/or debug data exchanges, may be encrypted with the debug session keys assigned for the "Group of Interdependent Targets" 450.

For example, the message exchanges may be encrypted using the debug session keys assigned for the "Group of Interdependent Targets" 450, for example, to provide a technical solution to ensure that, e.g., in a virtualized environment, debug messages and/or data messages are non-comprehensible by other virtual machines, for example, even when these messages/data are propagated to all virtual machines.

In some demonstrative aspects, as indicated at block 416 of Fig. 4B, the debugger software of DTS 470, e.g., debugger 163 (Fig. 1), may issue a time stamp packet, which may be configured to support synchronizing the debug data received from the "Group of Interdependent Targets" 450 with the global time of the DTS 470 where the debug software, e.g., debugger 163 (Fig. 3) is running.

In some demonstrative aspects, the time stamp packet may be broadcasted, for example, through a mainband data channel for debug, and/or through a sideband data channel for debug. For example, the broadcasting the time stamp packet may be implementation specific, e.g., without restriction on the mechanism and data channel used for broadcasting the time stamp packet.

In some demonstrative aspects, as indicated at block 418 of Fig. 4B, the debug bridge 460 may forward the time stamp packet to the debug targets belonging to a debug target group having a group ID indicated by the time stamp packet, e.g., as described above.

In some demonstrative aspects, as indicated at block 420 of Fig. 4B, the debug manager, e.g., debug manger 126 (Fig. 1), in the "Group of Interdependent Targets" 450 may establish a correlation of its local time with the global time specified in the time stamp packet received from the DTS 470, e.g., as described above.

In some demonstrative aspects, as indicated at block 422 of Fig. 4B, the debugger software of DTS 470, e.g., debugger 163 (Fig. 1), may generate a debug request for a group of debug targets belonging to a debug target group, e.g., the debug target group 120 (Fig. 1).

In some demonstrative aspects, as indicated at block 422 of Fig. 4B, the debugger software of DTS 470, e.g., debugger 163 (Fig. 1), may encrypt the debug request, for example, based on the session key information corresponding to the debug target group.

In some demonstrative aspects, as indicated at block 422 of Fig. 4B, the debugger software of DTS 470, e.g., debugger 163 (Fig. 1), may generate a debug request message, for example, by appending a Group-ID corresponding to the debug target group, e.g., the group ID corresponding to the debug target group 120 (Fig. 1), to the encrypted debug request message, e.g., as described above.

In some demonstrative aspects, as indicated at block 422 of Fig. 4B, the debugger software of DTS 470, e.g., debugger 163 (Fig. 1), may forward the debug request message to the debug bridge 460, e.g., in the DTC, e.g., as described above.

In some demonstrative aspects, as indicated at blocks 424 and 428 of Fig. 4C, the debug bridge 460, e.g., in the DTC, may identify the group ID in the debug request message and may ensure that the debug request from the DTS 470 is forwarded to the authenticated/valid targets under debug 450.

In some demonstrative aspects, as indicated at block 430 of Fig. 4C, the debug manager of a debug target 450, e.g., debug manager 126 (Fig. 1) of debug target 122 (Fig. 1), may receive the debug request message, and may identify that the debug request in the debug request message is to be executed by the debug target 450, e.g., as described above.

In some demonstrative aspects, the debug manager of a debug target 450, e.g., debug manager 126 (Fig. 1) of debug target 122 (Fig. 1), may identify that the debug request in the debug request message is to be executed by the debug target 450, for example, based on a determination that the group ID in the debug request message matches the group ID of the debug target group to which the debug target 450 belongs, e.g., as described above.

In some demonstrative aspects, as indicated at block 430 of Fig. 4C, the debug manager of a debug target 450, e.g., debug manager 126 (Fig. 1) of debug target 122 (Fig. 1), may decrypt the encrypted debug request in the debug request message, for example, based on the session key information corresponding to the group ID of the debug target group to which the debug target 450 belongs, e.g., as described above.

In some demonstrative aspects, as indicated at block 432 of Fig. 4C, the debug manager of a debug target 450, e.g., debug manager 126 (Fig. 1) of debug target 122 (Fig. 1), may execute the decrypted debug request from DTS 470.

In some demonstrative aspects, as indicated at block 434 of Fig. 4C, the debug manager of a debug target 450, e.g., debug manager 126 (Fig. 1) of debug target 122 (Fig. 1), may generate a debug response, e.g., as described above.

For example, the debug manager of a debug target 450, e.g., debug manager 126 (Fig. 1) of debug target 122 (Fig. 1), may generate the debug response including debug information, for example, based on execution of the debug request by the debug target 450.

In some demonstrative aspects, as indicated at block 434 of Fig. 4C, the debug manager of a debug target 450, e.g., debug manager 126 (Fig. 1) of debug target 122 (Fig. 1), may append to the debug response a timestamp, e.g., as described above.

In some demonstrative aspects, the debug manager of a debug target 450, e.g., debug manager 126 (Fig. 1) of debug target 122 (Fig. 1), may determine the timestamp, for example, based on the synchronized clock determined based on the DTS time information in the time synchronization packet from the DTS 470, e.g., as described above.

In some demonstrative aspects, as indicated at block 434 of Fig. 4C, the debug manager of a debug target 450, e.g., debug manager 126 (Fig. 1) of debug target 122 (Fig. 1), may encrypt the debug response, for example, based on the session key information corresponding to the group ID of the debug target group to which the debug target 450 belongs, e.g., as described above.

In some demonstrative aspects, as indicated at block 434 of Fig. 4C, the debug manager of a debug target 450, e.g., debug manager 126 (Fig. 1) of debug target 122 (Fig. 1), may generate a debug response message, for example, by appending to the encrypted debug response the group ID of the debug target group to which the debug target 450 belongs, e.g., as described above.

In some demonstrative aspects, as indicated at block 434 of Fig. 4C, the debug manager of a debug target 450, e.g., debug manager 126 (Fig. 1) of debug target 122 (Fig. 1), may forward the debug response message to the debug bridge 460, e.g., in the DTC.

In some demonstrative aspects, as indicated at block 436 of Fig. 4C, the debug bridge 460, e.g., in the DTC, may forward the debug response message from the debug target 450 to the DTS 470.

In some demonstrative aspects, as indicated at block 438 of Fig. 4C, the DTS 470 may process the debug response message, which was forwarded by the debug bridge 460, e.g., in the DTC, e.g., as described above.

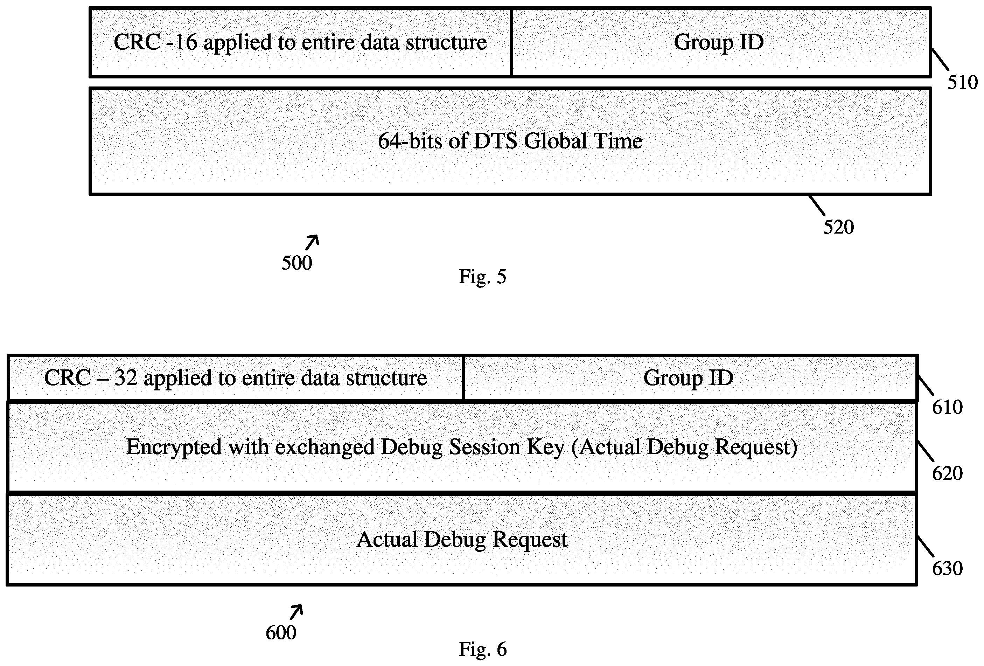

Reference is made to Fig. 5, which schematically illustrates a time synchronization packet format 500, in accordance with some demonstrative aspects.

For example, DTS 160 (Fig. 1), debugger 163 (Fig. 1), debug controller 140 (Fig. 1), debug bridge 144 (Fig. 1), debug target 122 (Fig. 1), and/or debug manager 126 (Fig. 1), may be configured to generate, process and/or communicate one or more time synchronization packets, for example, according to the time synchronization packet format 500.

In some demonstrative aspects, as shown in Fig. 5, the time synchronization packet format 500 may include DTS time information 520, which may be based on a DTS clock of a DTS from which the time synchronization packet 500 is sent, e.g., as described above.

For example, as shown in Fig. 5, DTS time information 520 may be provided in the form of a DTS global time, for example, including 64-bits of the DTS clock.

In other aspects, DTS time information 520 may be configured to include time information according to any other suitable format and/or bit-size.

In some demonstrative aspects, as shown in Fig. 5, the time synchronization packet format 500 may include a group ID field 510, which may be appended to the DTS time information 510.

In some demonstrative aspects, the group ID field 510 may include a group ID value.

In some demonstrative aspects, the group ID value in the group ID field 510 may be set, for example, by the DTS from which the time synchronization packet 500 is sent, e.g., as described above.

In some demonstrative aspects, the group ID value in the group ID field 510 may be set, for example, to identify a debug target group to which the DTS time information 520 is to be provided, e.g., as described above.

Reference is made to Fig. 6, which schematically illustrates a debug request format 600, in accordance with some demonstrative aspects.

For example, DTS 160 (Fig. 1), debugger 163 (Fig. 1), debug controller 140 (Fig. 1), debug bridge 144 (Fig. 1), debug target 122 (Fig. 1), and/or debug manager 126 (Fig. 1), may be configured to generate, process and/or communicate one or more debug request messages, for example, according to the debug request format 600.

In some demonstrative aspects, as shown in Fig. 6, the debug request format 600 may include debug request information 630. For example, the debug request information 630 may be set, for example, by a DTS from which the debug request message 600 is sent, e.g., as described above.

For example, debug request information 630 may include information of a debug request to be executed by a plurality of debug targets in a group of debug targets, e.g., as described above.

In some demonstrative aspects, as shown in Fig. 6, the debug request format 600 may include the debug request information 630 encrypted (620) according to debug session key information corresponding to the group of debug targets, e.g., as described above.

In some demonstrative aspects, as shown in Fig. 6, the debug request format 600 may include a group ID field 610, which may be appended to the encrypted debug request 620.

In some demonstrative aspects, the group ID field 610 may include a group ID value.

In some demonstrative aspects, the group ID value in the group ID field 610 may be set, for example, by the DTS from which the debug request message 600 is sent, e.g., as described above.

In some demonstrative aspects, the group ID value in the group ID field 610 may be set, for example, to identify a debug target group to which the debug request information 630 is to be provided, e.g., as described above.

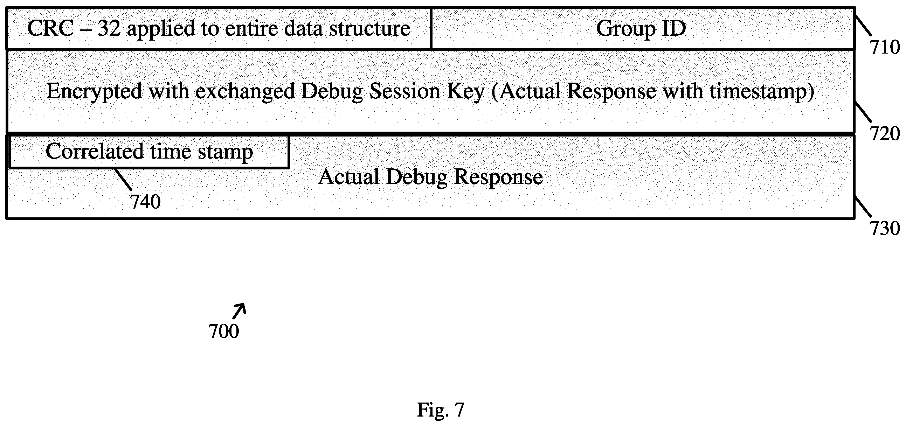

Reference is made to Fig. 7, which schematically illustrates a debug response format 700, in accordance with some demonstrative aspects.

For example, DTS 160 (Fig. 1), debugger 163 (Fig. 1), debug controller 140 (Fig. 1), debug bridge 144 (Fig. 1), debug target 122 (Fig. 1), and/or debug manager 126 (Fig. 1), may be configured to generate, process and/or communicate one or more debug response messages, for example, according to the debug response format 700.

In some demonstrative aspects, as shown in Fig. 7, the debug response format 700 may include debug response information 730. For example, the debug response information 730 may be set, for example, by a debug target from which the debug response message 700 is sent, e.g., as described above.

For example, debug response information 730 may include information of based on execution of a debug request from a DTS by a debug target from which the debug response message 700 is sent, e.g., as described above.

In some demonstrative aspects, as shown in Fig. 7, debug response information 730 may include a timestamp 740, which may be set by the debug target from which the debug response message 700 is sent, e.g., as described above.

In some demonstrative aspects, as shown in Fig. 7, the timestamp 740 may include a correlated timestamp 740, which may be based on a time correlation between a local clock of the debug target and a DTS clock, for example, of the DTS from which the debug request was provided, e.g., as described above.

In some demonstrative aspects, as shown in Fig. 7, the debug response format 700 may include the debug response information 730 encrypted (720) according to debug session key information corresponding to a group of debug targets to which the debug target belongs, e.g., as described above.

In some demonstrative aspects, as shown in Fig. 7, the debug response format 700 may include a group ID field 710, which may be appended to the encrypted debug response 720.

In some demonstrative aspects, the group ID field 710 may include a group ID value.

In some demonstrative aspects, the group ID value in the group ID field 710 may be set, for example, by the debug target from which the debug response message 700 is sent, e.g., as described above.

In some demonstrative aspects, the group ID value in the group ID field 710 may be set, for example, to identify the debug target group to which the debug target belongs, e.g., as described above.

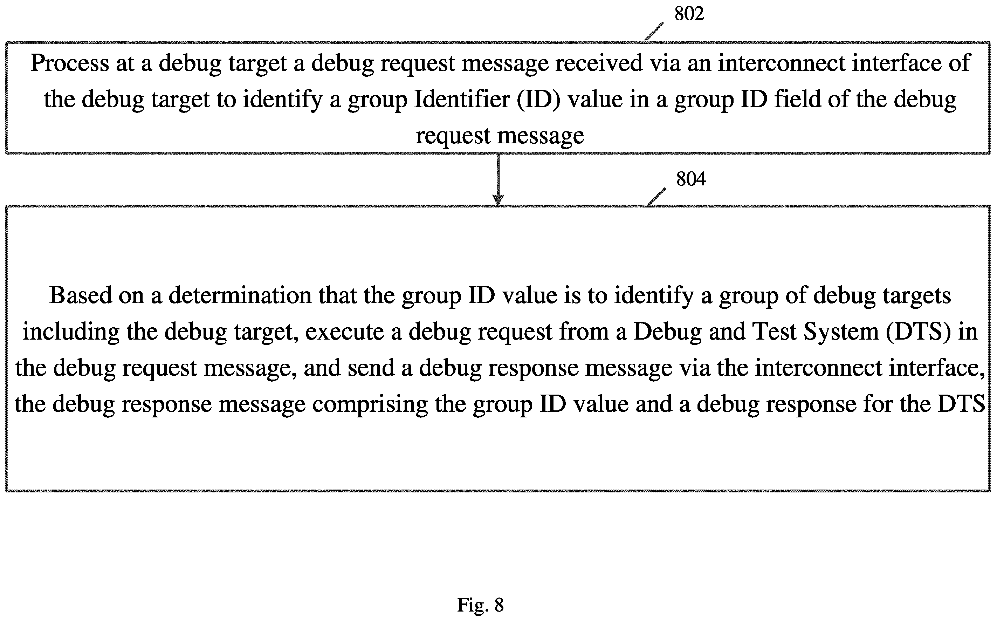

Reference is made to Fig. 8, which schematically illustrates a method of debugging, in accordance with some demonstrative aspects. For example, one or more of the operations of the method of Fig. 8 may be performed by one or more elements of a system, e.g., system 100 (Fig. 1), for example, one or more debug targets, e.g., debug target 120 (Fig. 1), debug target 222 (Fig. 2), and/or debug target 322 (Fig. 3), and/or a debug manager, e.g., debug manager 128 (Fig. 1), debug manager 226 (Fig. 2), and/or debug manger 326 (Fig. 3).

As indicated at block 802, the method may include processing at a debug target a debug request message received via an interconnect interface of the debug target to identify a group ID value in a group ID field of the debug request message. For example, debug manager 126 (Fig. 1) may process the debug request message to identify the group ID value in the group ID field 610 (Fig. 6) of the debug request message 600 (Fig. 6), e.g., as described above.

As indicated at block 804, the method may include executing a debug request from a DTS in the debug request message, and send a debug response message via the interconnect interface, for example, based on a determination that the group ID value is to identify a group of debug targets including the debug target. For example, the debug response message may include the group ID value and a debug response for the DTS. For example, debug manager 126 (Fig. 1) may send the debug response message 700 (Fig. 7) including the debug response 730 (Fig. 7), and the group ID value in the group ID field 710 (Fig. 7), e.g., as described above.

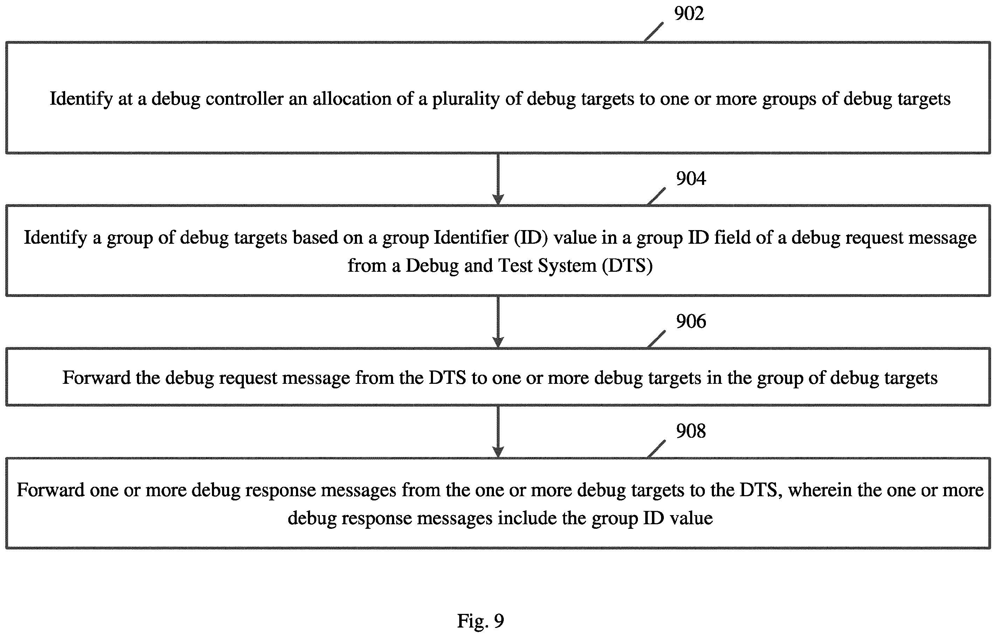

Reference is made to Fig. 9, which schematically illustrates a method of debugging, in accordance with some demonstrative aspects. For example, one or more of the operations of the method of Fig. 9 may be performed by one or more elements of a system, e.g., system 100 (Fig. 1), for example, one or more debug controllers, e.g., debug controller 140 (Fig. 1), debug controller 240 (Fig. 2), and/or debug controller 340 (Fig. 3), and/or a debug bridge, e.g., debug bridge 144 (Fig. 1), debug bridge 244 (Fig. 2), and/or debug bridge 344 (Fig. 3).

As indicated at block 902, the method may include identifying at a debug controller an allocation of a plurality of debug targets to one or more groups of debug targets. For example, debug bridge 144 (Fig. 1) may identify the allocation of the plurality of debug targets 119 (Fig. 1) to the one or more groups of debug targets, e.g., as described above.

As indicated at block 904, the method may include identifying a group of debug targets based on a group ID value in a group ID field of a debug request message from a DTS. For example, debug bridge 144 (Fig. 1) may identify the group of debug targets 120 (Fig. 1), for example, based on a group ID value in the group ID field 610 (Fig. 6) of the debug request message 600 (Fig. 6) from the DTS 160 (Fig. 1), e.g., as described above.

As indicated at block 906, the method may include forwarding the debug request message from the DTS to one or more debug targets in the group of debug targets. For example, debug bridge 144 (Fig. 1) may forward the debug request message 600 (Fig. 6) from the DTS 160 (Fig. 1) to one or more debug targets in the debug target group 120 (Fig. 1), e.g., as described above.

As indicated at block 908, the method may include forwarding one or more debug response messages from the one or more debug targets to the DTS. For example, the one or more debug response messages may include the group ID value. For example, debug bridge 144 (Fig. 1) may forward one or more debug response messages 700 (Fig. 7) from the debug target group 120 (Fig. 1) to DTS 160 (Fig. 1), e.g., as described above.

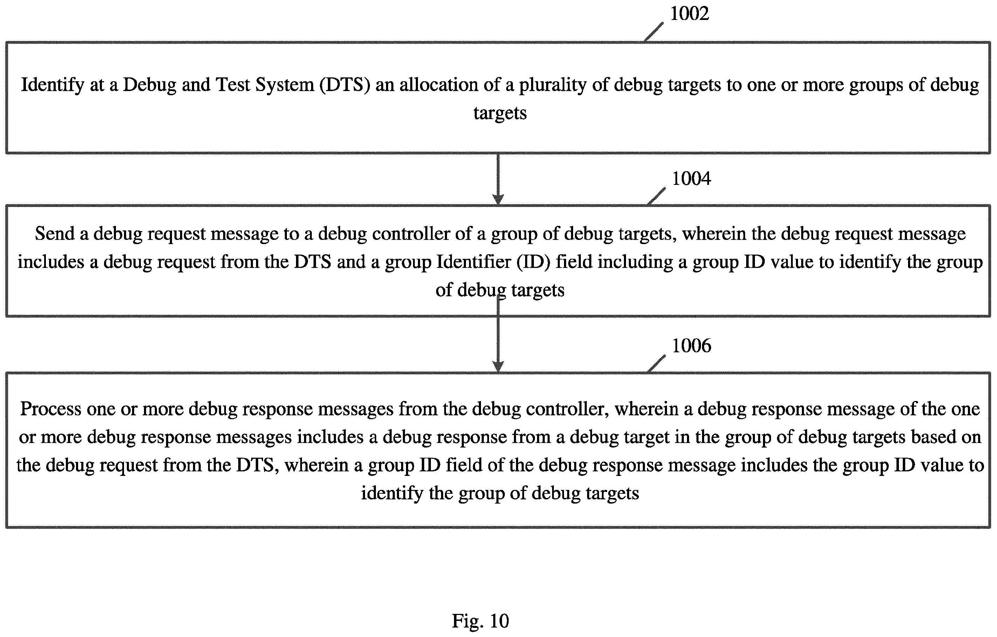

Reference is made to Fig. 10, which schematically illustrates a method of debugging, in accordance with some demonstrative aspects. For example, one or more of the operations of the method of Fig. 10 may be performed by one or more elements of a system, e.g., system 100 (Fig. 1), for example, one or more DTSs, e.g., DTS 160 (Fig. 1), DTS 260 (Fig. 2), and/or DTS 360 (Fig. 3), and/or a debugger, e.g., debugger 163 (Fig. 1), controller 262 (Fig. 2), and/or controller 362 (Fig. 3).

As indicated at block 1002, the method may include identifying at a DTS an allocation of a plurality of debug targets to one or more groups of debug targets. For example, debugger 163 (Fig. 1) may identify the allocation of the plurality of debug targets 119 (Fig. 1) to the one or more groups of debug targets, e.g., as described above.

As indicated at block 1004, the method may include sending a debug request message to a debug controller of a group of debug targets. For example, the debug request message may include a debug request from the DTS and a group ID field including a group ID value to identify the group of debug targets. For example, debugger 163 (Fig. 1) may send the debug request message 700 (Fig. 7) to the debug controller 140 (Fig. 1), e.g., as described above.

As indicated at block 1006, the method may include processing one or more debug response messages from the debug controller. For example, a debug response message of the one or more debug response messages may include a debug response from a debug target in the group of debug targets based on the debug request from the DTS. For example, a group ID field of the debug response message may include the group ID value to identify the group of debug targets. For example, debugger 163 (Fig. 1) may process one or more debug response message 800 (Fig. 8) from the debug controller 140 (Fig. 1), e.g., as described above.

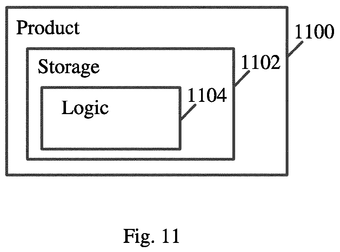

Reference is made to Fig. 11, which schematically illustrates a product of manufacture 1100, in accordance with some demonstrative aspects. Product 1100 may include one or more tangible computer-readable ("machine-readable") non-transitory storage media 1102, which may include instructions, e.g., implemented by logic 1104, operable to, when executed by at least one processor, enable the at least one processor to perform, trigger and/or implement one or more operations and/or functionalities described with reference to the Figs. 1-10, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1100 and/or machine readable storage media 1102 may include one or more types of computer-readable storage media capable of storing data, including volatile memory, non-volatile memory, removable or non-removable memory, erasable or non-erasable memory, writeable or re-writeable memory, and the like. For example, machine readable storage media 1102 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1104 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1104 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising a debug target, the debug target comprising an interconnect interface; and a debug manager configured to cause the debug target to process a debug request message received from a Debug and Test System (DTS) via the interconnect interface, wherein the debug request message comprises a group Identifier (ID) value, e.g., in a group ID field of the debug request message, and a debug request; and based on a determination that the group ID value identifies a group of debug targets comprising the debug target, execute the debug request, and send a debug response message via the interconnect interface, the debug response message comprising the group ID value and a debug response for the DTS.

Example 2 includes the subject matter of Example 1, and optionally, wherein the debug manager is configured to process a time synchronization packet to identify the group ID value in a group ID field of the time synchronization packet, and to determine a time correlation between a local clock and a DTS clock based on DTS time information in the time synchronization packet.

Example 3 includes the subject matter of Example 2, and optionally, wherein the debug manager is configured to set a timestamp in the debug response for the DTS based on the time correlation.

Example 4 includes the subject matter of any one of Examples 1-3, and optionally, wherein the debug manager is configured to decrypt the debug request from the DTS according to debug session key information corresponding to the group ID, and to encrypt the debug response for the DTS according to the debug session key information corresponding to the group ID.

Example 5 includes the subject matter of any one of Examples 1-4, and optionally, wherein the debug manager is configured to cause the debug target to communicate the debug request message and the debug response message with a debug bridge between the debug target and the DTS.

Example 6 includes the subject matter of any one of Examples 1-5, and optionally, wherein the debug manager is configured to cause the debug target to communicate the debug request message and the debug response message with a Debug and Test Controller (DTC) between the debug target and the DTS.

Example 7 includes the subject matter of any one of Examples 1-6, and optionally, wherein the group of debug targets comprises a group of interdependent targets to be debugged together for a debugged system functionality.

Example 8 includes the subject matter of any one of Examples 1-7, and optionally, wherein the debug target comprises a Peripheral Component Interconnect Express (PCIe) endpoint, the interconnect interface comprising a PCIe interface.

Example 9 includes the subject matter of any one of Examples 1-7, and optionally, wherein the debug target comprises a Universal Chiplet Interconnect Express (UCIe) chiplet, the interconnect interface comprising a UCIe interface.

Example 10 includes the subject matter of any one of Examples 1-7, and optionally, wherein the debug target comprises a Compute Express Link (CXL) device, the interconnect interface comprising a CXL interface.

Example 11 includes the subject matter of any one of Examples 1-10, and optionally, wherein the debug request comprises a Mobile Industry Processor Interface (MIPI) command, and the debug response comprises a MIPI response.

Example 12 includes the subject matter of any one of Examples 1-11, and optionally, comprising the group of debug targets; an Input/Output (I/O) interface to communicate debug request messages and debug response messages with the DTS; and a debug bridge to communicate the debug request messages and the debug response messages with the group of debug targets.

Example 13 includes an apparatus comprising a debug controller to control a plurality of debug targets, the debug controller comprising an interconnect interface to communicate with the plurality of debug targets; and a debug bridge configured to identify an allocation of the plurality of debug targets to one or more groups of debug targets; identify a group of debug targets based on a group Identifier (ID) value in a debug request message from a Debug and Test System (DTS), e.g., in a group ID field of the debug request message; forward the debug request message from the DTS to one or more debug targets in the group of debug targets; and forward one or more debug response messages from the one or more debug targets to the DTS, wherein the one or more debug response messages comprise the group ID value.

Example 14 includes the subject matter of Example 13, and optionally, wherein the debug bridge is configured to identify a first allocation of a first plurality of debug targets to a first group of debug targets, and a second allocation of a second plurality of debug targets to a second group of debug targets; forward to the first group of debug targets a first debug request message from the DTS based on a determination that a group ID field in the first debug request message comprises a first group ID value corresponding to the first group of debug targets; and forward to the second group of debug targets a second debug request message from the DTS based on a determination that a group ID field in the second debug request message comprises a second group ID value corresponding to the second group of debug targets.

Example 15 includes the subject matter of Example 14, and optionally, wherein the debug bridge is configured to send to the DTS a first debug response message from a first debug target in the first group of debug targets, and to send to the DTS a second debug response message from a second debug target in the second group of debug targets.

Example 16 includes the subject matter of any one of Examples 13-15, and optionally, wherein the debug bridge is configured to identify the group ID value in a group ID field of a time synchronization packet from the DTS, and to forward the time synchronization packet to the one or more debug targets in the group of debug targets.

Example 17 includes the subject matter of any one of Examples 13-16, and optionally, wherein the debug bridge is configured to send to the DTS group allocation information to configure the allocation of the plurality of debug targets to the one or more groups of debug targets.

Example 18 includes the subject matter of any one of Examples 13-17, and optionally, wherein the debug controller comprises a Debug and Test Controller (DTC).

Example 19 includes the subject matter of any one of Examples 13-18, and optionally, wherein the group of debug targets comprises a group of interdependent targets to be debugged together for a debugged system functionality.

Example 20 includes the subject matter of any one of Examples 13-19, and optionally, wherein the interconnect interface comprises a Peripheral Component Interconnect Express (PCIe) interface, the plurality of debug targets comprising a plurality of PCIe endpoints.

Example 21 includes the subject matter of Example 20, and optionally, comprising a PCIe endpoint comprising the bridge controller.

Example 22 includes the subject matter of any one of Examples 13-19, and optionally, wherein the interconnect interface comprises a Universal Chiplet Interconnect Express (UCIe) interface, the plurality of debug targets comprising a plurality of UCIe chiplets.

Example 23 includes the subject matter of Example 22, and optionally, comprising a UCIe chiplet comprising the bridge controller.

Example 24 includes the subject matter of any one of Examples 13-19, and optionally, wherein the interconnect interface comprises a Compute Express Link (CXL) interface, the plurality of debug targets comprising a plurality of CXL devices.

Example 25 includes the subject matter of Example 24, and optionally, comprising a CXL device comprising the bridge controller.

Example 26 includes a product comprising one or more tangible computer-readable non-transitory storage media comprising instructions operable to, when executed by at least one processor, enable the at least one processor to cause a Debug and Test System (DTS) to identify an allocation of a plurality of debug targets to one or more groups of debug targets; send a debug request message to a debug controller of a group of debug targets, wherein the debug request message comprises a debug request from the DTS and a group Identifier (ID) value, e.g., in a group ID field, to identify the group of debug targets; and process one or more debug response messages from the debug controller, wherein a debug response message of the one or more debug response messages comprises a debug response from a debug target in the group of debug targets based on the debug request from the DTS, wherein the debug response message comprises the group ID value, e.g., in a group ID field of the debug response message, to identify the group of debug targets.

Example 27 includes the subject matter of Example 26, and optionally, wherein the instructions, when executed, cause the DTS to identify a first allocation of a first plurality of debug targets to a first group of debug targets, and a second allocation of a second plurality of debug targets to a second group of debug targets; send to the debug controller a first debug request message for the first group of debug targets, wherein a group ID field in the first debug request message comprises a first group ID value corresponding to the first group of debug targets; and send to the debug controller a second debug request message for the second group of debug targets, wherein a group ID field in the second debug request message comprises a second group ID value corresponding to the second group of debug targets.

Example 28 includes the subject matter of Example 27, and optionally, wherein the instructions, when executed, cause the DTS to process a first debug response message from a first debug target in the first group of debug targets to identify a first debug response from the first debug target, and to process a second debug response message from a second debug target in the second group of debug targets to identify a second debug response from the second debug target, wherein a group ID field in the first debug response message comprises the first group ID value corresponding to the first group of debug targets, wherein a group ID field in the second debug response message comprises the second group ID value corresponding to the second group of debug targets.

Example 29 includes the subject matter of any one of Examples 26-28, and optionally, wherein the instructions, when executed, cause the DTS to send to the debug controller a time synchronization packet comprising the group ID value in a group ID field of the time synchronization packet, and DTS time information corresponding to the DTS.

Example 30 includes the subject matter of any one of Examples 26-29, and optionally, wherein the instructions, when executed, cause the DTS to encrypt the debug request from the DTS according to debug session key information corresponding to the group ID, and to decrypt the debug response from the debug target according to the debug session key information corresponding to the group ID.

Example 31 includes the subject matter of any one of Examples 26-30, and optionally, wherein the instructions, when executed, cause the DTS to configure the allocation of the plurality of debug targets to the one or more groups of debug targets based on group allocation information from the debug controller.

Example 32 includes the subject matter of any one of Examples 26-31, and optionally, wherein the group of debug targets comprises a group of interdependent targets to be debugged together for a debugged system functionality.

Example 33 includes the subject matter of any one of Examples 26-32, and optionally, wherein the debug controller comprises a Debug and Test Controller (DTC).

Example 34 includes the subject matter of any one of Examples 26-33, and optionally, wherein the plurality of debug targets comprises a plurality of Peripheral Component Interconnect Express (PCIe) endpoints.

Example 35 includes the subject matter of any one of Examples 26-33, and optionally, wherein the plurality of debug targets comprises a plurality of Universal Chiplet Interconnect Express (UCIe) chiplets.

Example 36 includes the subject matter of any one of Examples 26-33, and optionally, wherein the plurality of debug targets comprises a plurality of Compute Express Link (CXL) devices.

Example 37 includes the subject matter of any one of Examples 26-36, and optionally, wherein the debug request comprises a Mobile Industry Processor Interface (MIPI) command, and the debug response comprises a MIPI response.

Example, 38 includes a system comprising the subject matter of any of Examples 1-12, the subject matter of any of Examples 13-25, and/or the subject matter of any of Examples 26-37.

Example 39 includes a System on Chip (SoC) comprising the subject matter of any of Examples 1-37.

Example 40 includes a package comprising the subject matter of any of Examples 1-37.

Example 41 includes a computing device comprising the subject matter of any of Examples 1-37.

Example 42 includes a computing system comprising the subject matter of any of Examples 1-37.

Example 43 comprises a mobile device comprising the subject matter of any of Examples 1-37.

Example 44 comprises a server device comprising the subject matter of any of Examples 1-37.

Example 45 comprises an apparatus comprising means for executing any of the described operations of Examples 1-37.

Example 46 comprises a product comprising one or more tangible computer-readable non-transitory storage media comprising instructions operable to, when executed by at least one processor, enable the at least one processor to cause a device to perform any of the described operations of Examples 1-37.

Example 47 comprises an apparatus comprising: a memory interface; and processing circuitry configured to: perform any of the described operations of Examples 1-37.

Example 48 comprises a method comprising any of the described operations of Examples 1-37.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. An apparatus comprising:
a debug target comprising:
an interconnect interface; and
a debug manager configured to cause the debug target to:
process a debug request message received from a Debug and Test System (DTS) via the interconnect interface, wherein the debug request message comprises a group Identifier (ID) value and a debug request; and
based on a determination that the group ID value identifies a group of debug targets comprising the debug target, execute the debug request, and send a debug response message via the interconnect interface, the debug response message comprising the group ID value and a debug response for the DTS.

2. The apparatus of claim 1, wherein the debug manager is configured to process a time synchronization packet to identify the group ID value in a group ID field of the time synchronization packet, and to determine a time correlation between a local clock and a DTS clock based on DTS time information in the time synchronization packet.

3. The apparatus of claim 2, wherein the debug manager is configured to set a timestamp in the debug response for the DTS based on the time correlation.

4. The apparatus of any one of claims 1-3, wherein the debug manager is configured to decrypt the debug request from the DTS according to debug session key information corresponding to the group ID, and to encrypt the debug response for the DTS according to the debug session key information corresponding to the group ID.

5. The apparatus of any one of claims 1-4, wherein the debug manager is configured to cause the debug target to communicate the debug request message and the debug response message with a debug bridge between the debug target and the DTS.

6. The apparatus of any one of claims 1-5, wherein the debug manager is configured to cause the debug target to communicate the debug request message and the debug response message with a Debug and Test Controller (DTC) between the debug target and the DTS.

7. The apparatus of any one of claims 1-6, wherein the group of debug targets comprises a group of interdependent targets to be debugged together for a debugged system functionality.

8. The apparatus of any one of claims 1-7, wherein the debug target comprises a Peripheral Component Interconnect Express (PCIe) endpoint, the interconnect interface comprising a PCIe interface.

9. The apparatus of any one of claims 1-7, wherein the debug target comprises a Universal Chiplet Interconnect Express (DCIe) chiplet, the interconnect interface comprising a UCIe interface.

10. The apparatus of any one of claims 1-7, wherein the debug target comprises a Compute Express Link (CXL) device, the interconnect interface comprising a CXL interface.

11. The apparatus of any one of claims 1-7, wherein the debug request comprises a Mobile Industry Processor Interface (MIPI) command, and the debug response comprises a MIPI response.

12. The apparatus of any one of claims 1-11 comprising:
the group of debug targets;
an Input/Output (I/O) interface to communicate debug request messages and debug response messages with the DTS; and
a debug bridge to communicate the debug request messages and the debug response messages with the group of debug targets.

13. A method to be performed at a debug target, the method comprising:
processing a debug request message received from a Debug and Test System (DTS) via an interconnect interface of the debug target, wherein the debug request message comprises a group Identifier (ID) value and a debug request; and
based on a determination that the group ID value identifies a group of debug targets comprising the debug target, executing the debug request, and sending a debug response message via the interconnect interface, the debug response message comprising the group ID value and a debug response for the DTS.

14. The method of claim 13 comprising processing a time synchronization packet to identify the group ID value in a group ID field of the time synchronization packet, and determining a time correlation between a local clock and a DTS clock based on DTS time information in the time synchronization packet.

15. An apparatus comprising means for causing a debug target to perform the method of claim 13 or 14.
